(19)
Europäisches Patentamt
European Patent Office
Office européen des brevets

(11) **EP 1 768 401 A1**

(12) **EUROPEAN PATENT APPLICATION**
published in accordance with Art. 158(3) EPC

(43) Date of publication:
**28.03.2007 Bulletin 2007/13**

(51) Int Cl.:
*H04N 5/91* (2006.01)　　*G06F 3/00* (2006.01)
*G06F 3/06* (2006.01)　　*H04N 7/24* (2006.01)

(21) Application number: **05751467.1**

(22) Date of filing: **20.06.2005**

(86) International application number:
**PCT/JP2005/011286**

(87) International publication number:
**WO 2006/003808 (12.01.2006 Gazette 2006/02)**

(84) Designated Contracting States:
**AT BE BG CH CY CZ DE DK EE ES FI FR GB GR HU IE IS IT LI LT LU MC NL PL PT RO SE SI SK TR**

(30) Priority: **06.07.2004 JP 2004199821**

(71) Applicant: **MATSUSHITA ELECTRIC INDUSTRIAL CO., LTD.**
**Osaka 571-8501 (JP)**

(72) Inventors:
- **SUGIO, Toshiyasu**
**c/o Matsushita El Ind Co, Ltd**
**Chuo-ku, Osaka-shi, Osaka 540-6319 (JP)**
- **TOIDA, Hiroaki**
**c/o Matsushita El Ind Co, Ltd**
**Chuo-ku, Osaka-shi, Osaka 540-6319 (JP)**

- **NISHI, Takahiro**
**c/o Matsushita El Ind Co, Ltd**
**Chuo-ku, Osaka-shi, Osaka 540-6319 (JP)**
- **TOMA, Tadamasa**
**c/o Matsushita El Ind Co, Ltd**
**Chuo-ku, Osaka-shi, Osaka 540-6319 (JP)**
- **SASAI, Hisao**
**c/o Matsushita El Ind Co, Ltd**
**Chuo-ku, Osaka-shi, Osaka 540-6319 (JP)**

(74) Representative: **Ehlers, Jochen**
**Eisenführ, Speiser & Partner**
**Patentanwälte Rechtsanwälte**
**Postfach 10 60 78**
**28060 Bremen (DE)**

(54) **ENCODING OR DECODING DEVICE AND RECORDING/REPRODUCTION TERMINAL**

(57)    An object of the present invention is to provide a recording/reproduction terminal having a general-purpose slot and a detachable encoding or decoding device.

A recording/reproduction device includes: a recording/reproduction terminal 103 which records and reproduces signals representing audio or video; and a removable coding device 100 which is detachably connected to the recording/reproduction terminal 103, and the recording/reproduction terminal 103 has a terminal information storage unit 105 which stores terminal information which is information regarding the recording/reproduction terminal 103, and
a removable coding device 100 has: a terminal information obtainment unit 101 which obtains the terminal information from the recording/reproduction terminal 103 when the removable coding device 100 is connected to the recording/reproduction terminal 103; and a signal conversion unit 102 which encodes or decodes the signals representing audio or video based on the obtained terminal information.

FIG. 3

**Description**

**Technical Field**

The present invention relates to a detachable encoding or decoding device which compresses and codes video signals and audio signals, and a recording/reproduction terminal from which the encoding or decoding device is removed.

**Background Art**

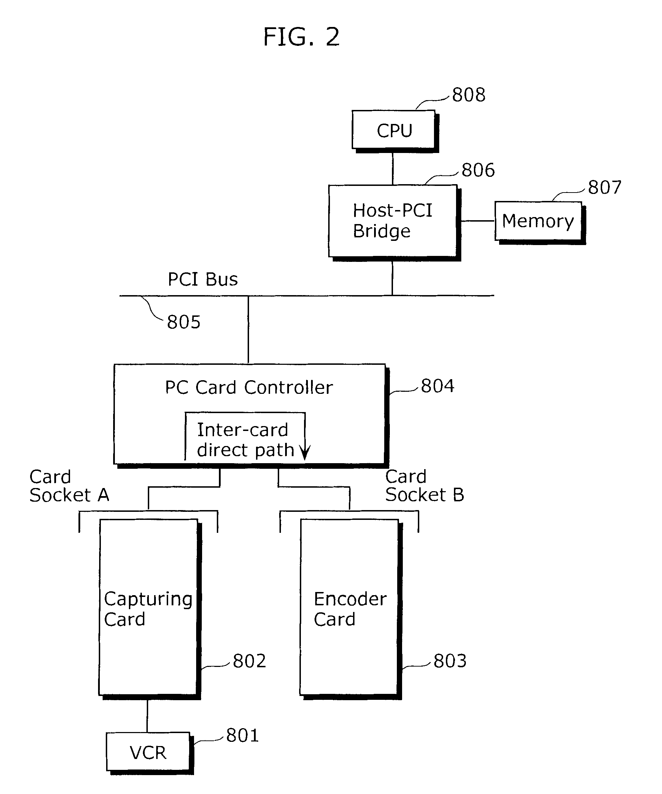

According to start of terrestrial digital broadcasting and wide use of a portable telephone with a camera function, codec techniques for storing video and audio into a hard disk, a storage medium, and the like have been diversified. For example, in the field of video, MPEG-2, MPEG-4, MPEG4-AVC, and the like are known, while in the field of audio, AMR, MPEG4-AAC, and the like are known. A products, such as a DVD recorder, a portable telephone with a camera function, and an in-vehicle terminal, carries the above multiple codec techniques as purpose-built LSIs or software in order to have audio-visual (AV) interaction between devices, in addition to original main functions of the product. Thereby, a cost of the product is increased. Further, when the codec techniques used in the standards and the like are changed, even if an old product has a means for receiving data which has been encoded by the new codec technique, the old product does not have a means for decoding such data, so that video or audio cannot be reproduced from the received encoded data. Still further, it is a manufacturer who determines what kind of codec technique is to be used in a decoding device built in the product and a user cannot select necessary codec techniques on purchase of the product, so that the user needs to pay a price even for the codec technique which would not be used frequently.
As examples for solving the above problems, the following patent references are disclosed.
The first example relates to a data reproduction device compliant with various coding methods.

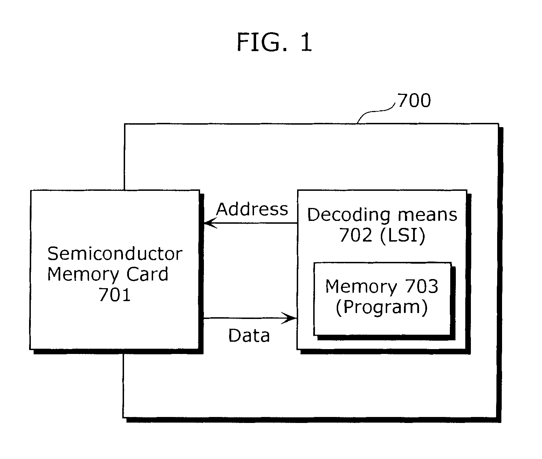

FIG. 1 is a block diagram showing a structure of a conventional portable data reproduction device that is the first example. When a semiconductor memory card 701 storing encoded data and a decoding program for decoding the encoded data is inserted into a slot, a portable data reproduction device 700 loads the decoding program in the semiconductor memory card 701 to a memory 703 in a decoding means 702. And then, the encoded data is read from the semiconductor memory card 701, and the encoded data is decoded and reproduced using the decoding program loaded into the memory 703. With such a structure as shown in FIG. 1, by changing the decoding program in the semiconductor memory card 701, the portable data reproduction device 1 is able to be compliant with various coding methods (see Patent Reference 1).
The second example is concerned with efficiency improvement of video data transfer between PC cards. An example of a structure of a moving picture encoder system using this system is shown in FIG. 2. FIG. 2 is a block diagram showing a structure of the conventional moving picture encoder system that is the second example. In FIG. 2, a video signal inputted from an external video cassette recorder (VCR) 801 is digitized at a video capturing board 802, and inputted into an encoder card 803 using an inter-card direct path 804 which does not require a PCI bus 805. The encoder card 803 encodes the inputted digital video signal and the encoded signal is transferred to a memory 807 of the system via the PCI bus 805. This makes it possible to transfer video data or the like between PC cards directly without using a system bus, so that a load of a CPU 808 is reduced, and a system using a plurality of PC cards without depending on performance of the system bus can be structured. If the above-mentioned moving picture encoder system is used, replacing of the encoder cards makes it possible to structure an encoding system compliant with various coding methods (see Patent Reference 2).

Patent Reference 1: Japanese Patent Laid-Open No. 2000-13237 publication
Patent Reference 2: Japanese Patent Laid-Open No. 9-237166 publication

**Disclosure of Invention**

**Problems that Invention is to Solve**

However, in the patent reference 1, the portable data reproduction device 700 needs to be embedded with an LSI for realizing the decoding means 702, which does not result in reduction of a cost of the reproduction device, so that the above problem is not able to be solved completely. Moreover, detail of a recording device is not described in the patent reference 1.
Furthermore, in the patent reference 2, it is necessary to prepare a plurality of PCI slots in a recording device and include a PC card controller having the inter-card direct path, so that a mounting load of the recording device is large. Still further, the encoded data is stored into the memory in the encoder system, so that it is impossible to store the encoded data into the encoder card 803 and then insert the encoder card 803 into another device in order to decode the data, which is not suitable for interaction among AV devices, for example, for sharing of data such as video data among the AV devices.

The present invention is provided to solve the above problems and an object of the present invention is to provide an encoding or decoding device compliant with various codec techniques and a recording/reproduction terminal having such encoding or decoding device.

**Means to Solve the Problems**

In order to solve above problems, the present invention provides a recording/reproduction terminal to which an encoding or decoding device is detachably connected and which records or reproduces a signal representing audio or video, the recording/reproduction terminal including: a terminal information storage unit which stores terminal information which is information regarding a recording/reproduction ability of the recording/reproduction terminal, and to output the terminal information to the encoding or decoding device when the encoding or decoding device is connected to the recording/reproduction terminal; and a signal transmission unit which transmits, to the encoding or decoding device, the signal representing audio or video to be encoded, when the signal representing audio or video is recorded.

Further, according to the present invention, the recording/reproduction terminal may further include storing encoded data obtained by encoding the signal representing audio or video into the encoding or decoding device.

Still further, according to the present invention, the terminal information may include information which indicates existence of a built-in encoding or decoding device built in the recording/reproduction terminal, the recording/reproduction terminal may make the encoding or decoding device encode the signal including audio or video, when the built-in encoding or decoding device does not exist.

Still further, according to the present invention, the recording/reproduction terminal may include a reproduction unit which receives, from the encoding or decoding device, the signal representing audio or video which is obtained by decoding the encoded data stored in the encoding or decoding device using the encoding or decoding device, and reproduces the signal, when the built-in encoding or decoding device does not exist.

Still further, according to the present invention, the terminal information may include coding format information which indicates a coding format used by the built-in encoding or decoding device, the recording/reproduction terminal further including a built-in encoding or decoding device may encode or decode the signal representing audio or video using a predetermined coding format, wherein the reproduction unit may receive the signal including audio or video which is decoded using the encoding or decoding device, and reproduce the signal when a coding format of the encoded data stored in the encoding or decoding device is different from the coding format indicated in the coding format information, and the built-in encoding or decoding device may receive the encoded data without decoding the encoded data, and decode the data when the coding format of the encoded data stored in the encoding or decoding device is the same as the coding format indicated in the coding format information.

Still further, according to the present invention, the recording/reproduction terminal may further include: a coding format notification receiving unit which receives from the encoding or decoding device a notification regarding selectable coding formats when the encoding or decoding device can encode or decode using a plurality of coding formats which are different from one another; and a coding format selection unit which displays the plurality of coding formats notified by the encoding or decoding device and to receive selection of one coding format made by a user, and wherein the recording/reproduction terminal makes the encoding or decoding device encode the signal representing audio or video using the coding format selected by the user.

Still further, according to the present invention, the terminal information may include information which indicates existence of a built-in encoding or decoding device built in the recording/reproduction terminal, and a coding format information which indicates a coding format used by the built-in encoding or decoding device when the built-in encoding or decoding device exists, the recording/reproduction terminal including an encoded data receiving unit which (1) receives encoded data whose coding format is converted into a coding format indicated in the coding format information when the coding format of the encoded data stored in the encoding or decoding device is different from the coding format indicated in the coding format information, and (2) receives the encoded data without converting the coding format of the encoded data, when the coding format of the encoded data stored in the encoding or decoding device is the same as the coding format indicated in the coding format information.

Still further, according to the present invention, the recording/reproduction terminal may further include: a memory which provides a working area for encoding or decoding processing performed by the encoding or decoding device; a memory use request receiving unit which receives a use request for the memory from the encoding or decoding device; and a memory control unit which makes the encoding or decoding device use a part or all of the area in the memory when the use request is received.

Still further, according to the present invention, the terminal information may include memory information which indicates an available capacity of the memory in the recording/reproduction terminal, the recording/reproduction terminal may further include an available capacity detection unit may regularly detect the available capacity of the memory, and the memory control unit may update the memory information in the terminal information with a value of the newly detected available capacity.

Still further, according to the present invention, the encoding or decoding device which is detachably connected to a recording/reproduction terminal which records or reproduces a signal representing audio or video, and the encoding or decoding device may include: a terminal information obtainment unit which obtains, from the recording/reproduction terminal, terminal information which is information regarding a recording/reproduction ability of the recording/reproduction terminal when the encoding or decoding device is connected to the recording/reproduction terminal; and an encoding or decoding unit which encodes or decodes the signal representing audio or video based on the obtained terminal information.

Still further, according to the present invention, the terminal information may include information which indicates existence of a built-in encoding or decoding device built in the recording/reproduction terminal, and a coding format information which indicates a coding format used by the built-in encoding or decoding device when the built-in encoding or decoding device exists, the encoding and decoding unit may further include a trans-coding unit which (1) converts a coding format of the encoded data stored in the encoded data storage unit into a coding format indicated in the coding format information when the coding format of the encoded data is different from the coding format indicated in the coding format information, and (2) transmits the encoded data without converting the coding format of the encoded data, to the recording/reproduction terminal when the coding format of the encoded data is the same as the coding format indicated in the coding format information.

Still further, according to the present invention, the encoding or decoding unit may include a plurality of encoding or decoding sub-units which encodes or decodes using coding formats which are different from one another, and the encoding or decoding unit may encodes the signal representing audio or video by an encoding or decoding sub-unit whose coding format has the least number of bits of the encoded data among the plurality of the coding formats.

Still further, according to the present invention, the encoding or decoding unit may convert at least one of a frame rate and resolution of the moving picture signal depending on an available capacity of the encoded data storage unit when the signal including audio or video is the moving picture signal, and to encode the converted signal.

Still further, according to the present invention, the encoded data storage unit may be included in a memory card which is detachably connected to the encoding or decoding device.

Still further, according to the present invention, the encoding or decoding unit may perform at least one of video encoding, video decoding, audio encoding, audio decoding, video trans-coding, and audio trans-coding.

Still further, the present invention can be realized not only as such encoding or decoding device and recording/reproduction terminal, but also as an encoding or decoding method and a recording and reproducing method having steps that are implemented by the characterized units included in the encoding or decoding device and the recording/reproduction terminal, or as a program causing a computer to execute the steps. Note that it is apparent that such a program can be distributed via a recording medium such as a CD-ROM and a transmission medium such as the Internet.

**Effects of the Invention**

As described above, the recording/reproduction terminal of the present invention has an effect that only connecting of the removable encoding or decoding device to the recording/reproduction terminal makes it possible to encode and decode signals representing audio or video. Furthermore, the present invention has another effect that it is not necessary to embed a Codec LSI or a software Codec into the recording/reproduction terminal, which results in an effect of cost reduction. Still further, the present invention has still another effect that even if the Codec techniques used in the standards and the like are modified, by inserting an encoding or decoding device compliant with the new codec techniques, even old recording/reproduction terminal becomes compliant with the new Codec techniques. Still further, the present invention has still another effect that the user can replace the encoding or decoding device depending on a purpose of usage, so that the recording/reproduction terminal can be provided based on user's desire.

Still further, the present invention has still another effect that, by replacing the encoding or decoding device with another encoding or decoding device, encoding, decoding, and trans-coding of video or audio can be switched.

Still further, the present invention has still another effect that, when the encoding or decoding device is inserted into the recording/reproduction terminal, the encoding or decoding device can obtain terminal information of the recording/reproduction terminal, so that it is not necessary to obtain the terminal information every time video or the like is encoded and decoded.

Still further, the present invention has still another effect that, the generated encoded data is stored in the encoded data storage unit in the encoding or decoding device, which makes it possible to exchanging the encoding or decoding device among various recording/reproduction terminals in order to reproduce the encoded data stored in the encoded data storage unit in the encoding or decoding device, so that AV interaction among the recording/reproduction terminals can be simplified.

Still further, the present invention has another effect that, by obtaining the information regarding maximum data transfer between the recording/reproduction terminal and the encoding or decoding device, a frame rate or resolution of video decoded by the encoding or decoding device can be converted based on the maximum data transfer amount information, so that it is possible to reproduce video having quality that is higher than quality of video which is produced at real time by the recording/reproduction terminal or video which is decoded.

Still further, the present invention has another effect that, by obtaining the resolution information suitable for a display device of the recording/reproduction device, resolution of video decoded by the encoding or decoding device can be converted based on the recording/reproduction device, so that it is possible to output video having resolution suitable for each terminal into which the encoding or decoding device is inserted.

Still further, the present invention has another effect that, by obtaining built-in encoding device information stored in the recording/reproduction terminal, and transferring encoded data whose coding format can be decoded by the recording/reproduction terminal, it is possible to restrain transfer amount more than when decoded video whose data amount is large is transferred.

Still further, the present invention has another effect that the encoded data generated by the recording/reproduction terminal can be stored as it is into an internal memory in the encoding or decoding device, so that the internal memory can hold data of a plurality of coding formats.

Still further, the present invention has another effect that, by reducing a frame rate and resolution of video received from the recording/reproduction terminal based on an available capacity of the internal memory in the encoding or decoding device, it is possible to prevent shortage of the available capacity of the internal memory during recording.

Still further, the present invention has another effect that, even if the recording/reproduction terminal is an old product which is not compliant with the new Codec format, only by holding a general-purpose slot such as a SD slot, reproduction can be performed by trans-coding data into encoded data in the new codec format by the encoding or decoding device.

Still further, the present invention has another effect that the encoded data storage unit storing the encoded data can be removed from the encoding or decoding device, so that when an available capacity of the memory storing the encoded data is short, replacing of only semiconductor memory not of a whole encoding or decoding device makes it possible to encode and decode new video.

**Brief Description of Drawings**

[FIG. 1] FIG. 1 is a block diagram showing a structure of the conventional portable data reproduction device that is the first example. (Prior art)

[FIG. 2] FIG. 2 is a block diagram showing a structure of the conventional moving picture encoder system that is the second example.

[FIG. 3] FIG. 3 is a block diagram showing one example of a recording/reproduction device according to the first embodiment of the present invention. (First embodiment)

[FIG. 4] FIG. 4 is a flowchart showing an operation performed by the recording/reproduction device to transfer data from the recording/reproduction terminal to an internal memory in a removable coding device.

[FIG. 5] FIG. 5 is a flowchart showing an operation performed by the recording/reproduction device to transfer data from the internal memory in the removable coding device to the recording/reproduction terminal.

[FIG. 6] FIG. 6A is a table showing one example of indication of terminal information. FIG. 6B is a table showing one example of the terminal information table indicating a relationship between ID of each item indicated by the terminal information and detail of each item indicated by the ID.

[FIG. 7] FIG. 7 is a block diagram showing an internal structure of a signal conversion unit according to the first embodiment.

[FIG. 8] FIG. 8 is a flowchart showing an operation performed by the signal conversion unit when data is transferred from the recording/reproduction terminal.

[FIG. 9] FIG. 9 is a flowchart showing processing when a conversion parameter of video data is decided.

[FIG. 10] FIG. 10 is a flowchart showing an operation performed by a signal conversion unit in a case that data stored in the inside memory is transferred into the outside.

[FIG. 11] FIG. 11 is a flowchart showing an operation performed by the control unit to determine a conversion parameter.

[FIG. 12] FIG. 12 is a block diagram showing an internal structure of the resolution conversion unit shown in FIG. 4.

[FIG. 13] FIG. 13 is a flowchart showing an operation performed by the resolution conversion unit shown in FIG. 12.

[FIG. 14] FIG. 14 is a block diagram showing an internal structure of a frame rate conversion unit shown in FIG. 7.

[FIG. 15] FIG. 15 is a flowchart showing an operation performed by the frame rate conversion unit shown in FIG. 14.

[FIG. 16] FIG. 16 is a block diagram showing another example of the recording/reproduction device according to the first embodiment.

[FIG. 17] FIGS. 17A and 17B are diagrams showing terminal information and a terminal information table to be stored into a terminal information storage unit.

[FIG. 18] FIG. 18 is a block diagram showing one example of a recording/reproduction device according to the second embodiment.

(Second embodiment)

[FIG. 19] FIG. 19 is a block diagram showing an internal structure of a signal conversion unit according to the second embodiment.

[FIG. 20] FIG. 20 is a flowchart showing an operation performed by the signal conversion unit shown in FIG. 19 to perform trans-coding. [FIG. 21] FIG. 21 is a block diagram showing one example of a recording/reproduction device according to the embodiment.

(Third embodiment)

[FIG. 22] FIG. 22 is a block diagram showing an internal structure of the signal conversion unit shown in FIG. 21.

[FIG. 23] FIG. 23 is a block diagram showing one example of a recording/reproduction device according to the fourth embodiment.

(Fourth embodiment)

[FIG. 24] FIG. 24 is a block diagram showing one example of an internal structure of a signal conversion unit shown in FIG. 23.

[FIG. 25] FIG. 25 is a flowchart showing an operation performed by the control unit when video data is encoded using a single encoding unit in the signal conversion unit.

[FIG. 26] FIG. 26 is a flowchart showing an operation performed by the control unit to encode video data by a coding format selected by a user.

[FIG. 27] FIG. 27 is a diagram showing one example of an AV interaction network which performs AV interaction among household appliances only by replacing a removable coding device.

**Numerical References**

| | |
|---|---|
| 100 | removable coding device |
| 101 | terminal information acquisition unit |
| 102 | signal conversion unit |
| 103 | recording/reproduction terminal |
| 104 | SD slot |
| 105 | terminal information storage unit |
| 106 | internal memory |
| 107 | camera |
| 108 | display |
| 140 | recording/reproduction terminal |
| 141 | control unit |
| 142 | memory |
| 143 | terminal information storage unit |
| 150 | removable coding device |
| 151 | terminal information obtainment unit |
| 152 | signal conversion unit |
| 201 | control unit |

| 202 | MPEG-AVC encoding unit |
|---|---|
| 203 | MPEG-AVC decoding unit |
| 204 | resolution conversion unit |
| 205 | frame rate conversion unit |
| 207 | data bus |
| 301 | resolution conversion determination unit |
| 302 | unit |
| 303 | pixel interpolation unit |
| 401 | frame rate conversion determination unit |
| 402 | unit |
| 403 | frame interpolation unit |
| 500 | signal conversion unit |
| 501 | trans-coding unit |
| 502 | control unit |
| 600 | removable coding device |
| 602 | signal conversion unit |
| 604 | mini SD slot |
| 606 | mini SD card |
| 700 | portable data reproduction device |
| 701 | semiconductor memory card |
| 702 | decoding means |
| 703 | memory |
| 802 | video capturing board |
| 803 | encoder card |
| 804 | inter-card direct path |
| 805 | bus |
| 807 | memory |
| 808 | CPU |
| 1400 | removable coding device |
| 1401 | recording/reproduction terminal |
| 1402 | MPEG-SP decoding device |
| 2200 | IC card |
| 2201 | refrigerator |
| 2202 | television set |
| 2203 | vehicle navigation |
| 2204 | microwave |
| 2205 | PDA |
| 2206 | portable telephone |
| 2210 | card slot |
| 2300 | removable coding device |
| 2301 | signal conversion unit |
| 2401 | control unit |
| 2402 | MPEG-ASP encoding unit |
| 2403 | MPEG-SP encoding unit |
| 2404 | MPEG-AVC encoding unit |
| 2405 | encoding unit |

**Best Mode for Carrying Out the Invention**

The following describes embodiments according to the present invention with reference to the drawings.

(First Embodiment)

A recording/reproduction device according to the first embodiment does not have a built-in coding device, but encodes video data captured by a built-in camera or other data by a removable coding device which can be removed from the recording/reproduction device, and stores the encoded video data into a built-in memory in the removable coding device. Note that the first embodiment describes: an MPEG4-AVC codec as an example of a signal conversion unit in the removable coding device; a SD slot as an example of a connection slot in the recording/reproduction terminal;

and a YUV format as an example of a video data format. Note that, in the first embodiment, the recording/reproduction terminal does not have a built-in coding device.

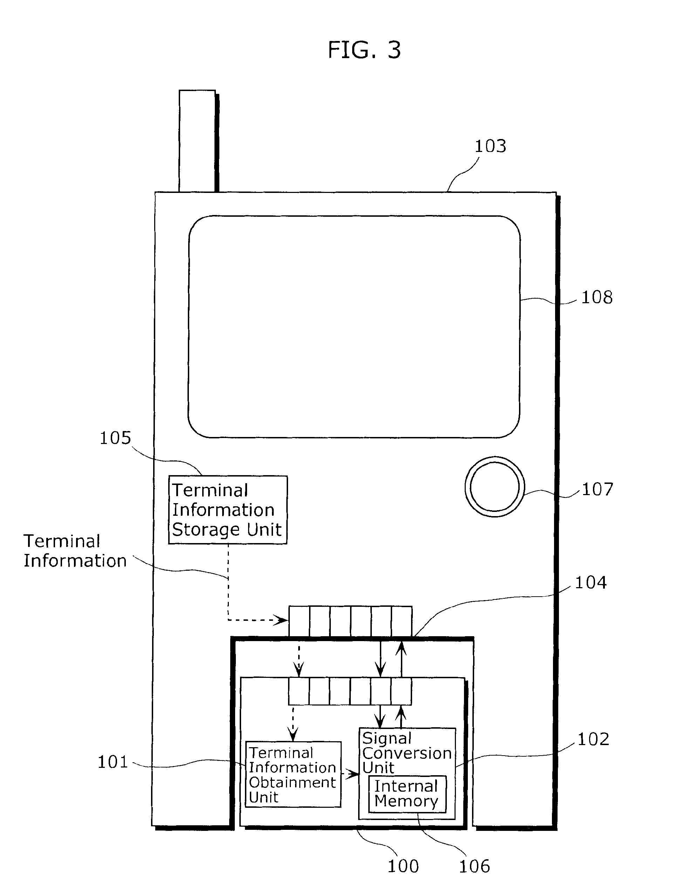

FIG. 3 is a block diagram showing one example of the recording/reproduction device according to the first embodiment of the present invention. The recording/reproduction device includes a removable coding device 100 and a recording/reproduction terminal 103, and the removable coding device 100 and the recording/reproduction terminal 103 are connected with each other via a card slot such as a SD slot 104. This removable coding device 100 is a coding device having functions of encoding video data and the like obtained from the recording/reproduction terminal 103 and then storing the encoded data into an internal memory, and of decoding the encoded data stored in the internal memory and then sending the decoded data to the recording/reproduction terminal 103, and the removable coding device 100 includes: a terminal information obtainment unit 101 which obtains, from the recording/reproduction terminal 103, information regarding the terminal (terminal information) and stores the terminal information; and a signal conversion unit 102 which performs MPEG4-AVC codec processing. Furthermore, the signal conversion unit 102 includes an internal memory 106 which stores the terminal information obtained by the terminal information obtainment unit 101 and further stores the encoded data encoded by the signal conversion unit 102.

The recording/reproduction terminal 103 includes: the SD slot 104 which is used to transfer data between the recording/reproduction terminal 103 and the removable coding device 100; a terminal information storage unit 105 which stores the terminal information regarding the recording/reproduction terminal 103; a camera 107 which captures video or still pictures; and a display 108 which displays image or a text.

When the removable coding device 100 is inserted into the SD slot 104, the recording/reproduction terminal 103 transfers the terminal information stored in the terminal information storage unit 105 to the removable coding device 100 via, for example, SD interface. Furthermore, video data captured by the built-in camera 107 or the like, other encoded data except the video data, which has been encoded and obtained by communication or the like, and data such as a text file are transferred to the removable coding device 100, so that the recording/reproduction terminal 103 uses the terminal information obtainment unit 101 in the removable coding device 100 as a storage unit for the data. Then, when the video data is reproduced or the text data is displayed, the recording/reproduction terminal 103 reads the object data from the removable coding device 100 and displays the read data on a display.

The removable coding device 100 receives, using the terminal information obtainment unit 101, the terminal information transferred from the recording/reproduction terminal 103 via the SD interface, and obtains information of maximum amount of data transfer (maximum data transfer amount information), information of resolution (resolution information), and information of the built-in coding device (built-in coding device information) regarding the recording/ reproduction terminal 103. Then, when data is transferred from the recording/reproduction terminal 103, conversion processing is performed depending on a kind of the data, and after that the converted data is stored in the internal memory 106. Moreover, when data in the internal memory 106 is transferred to the recording/reproduction terminal 103, the conversion processing is also performed depending on a kind of the data, and after that the converted data is transferred to the recording/reproduction terminal 103. When, for example, data in the internal memory 106 is encoded using MPEG-2, the encoded data is decoded using MPEG-2 and sent out to the recording/reproduction terminal 103.

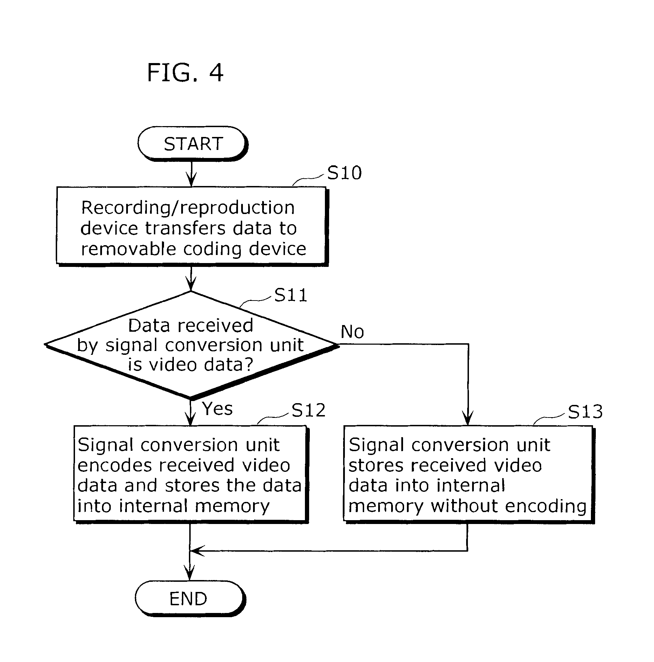

Next, data transfer from the recording/reproduction terminal 103 to the internal memory 106 of the removable coding device 100 according to the first embodiment is described with reference to FIG. 4. FIG. 4 is a flowchart showing an operation performed by the recording/reproduction device to transfer data from the recording/reproduction terminal 103 to the internal memory 106 in the removable coding device 100. Firstly, the recording/reproduction terminal 103 transfers video data in the YUV format captured by the built-in camera 107 or the like, other encoded data which has been encoded and obtained by communication or the like, and data such as a text file, via the SD interface to the removable coding device 100 (Step S10). The signal conversion unit 102 determines whether or not the received data is video data (Step S11), and if the received data is video data, then the data is encoded using an MPEG4-AVC method and stored into the internal memory 106 in the signal conversion unit 102 (Step S12). If the data received by the signal conversion unit 102 is not video data, then the received data is stored into the internal memory 106 without being encoded (Step S13).

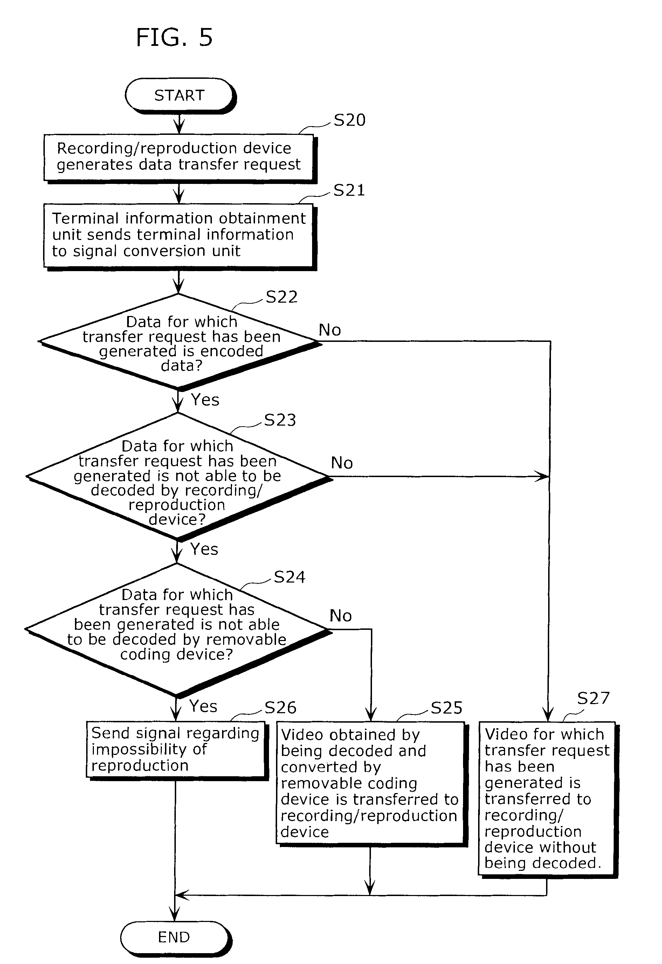

Next, a flow of data transfer from the internal memory 106 of the removable coding device 100 to the recording/ reproduction terminal 103 according to the first embodiment is described with reference to FIG. 5. FIG. 5 is a flowchart showing an operation performed by the recording/reproduction device to transfer data from the internal memory 106 of the removable coding device 100 to the recording/reproduction terminal 103. Firstly, when a data transfer request is generated by the recording/reproduction terminal 10:3 for the removable coding device 100 (Step S20), the terminal information obtainment unit 101 sends terminal information regarding the recording/reproduction terminal 103 to the signal conversion unit 102 (Step S21). Next, the signal conversion unit 102 determines whether or not data for which the reproduction request has been generated is encoded data (Step S22), and if the data is not encoded data, then the data is transferred to the recording/reproduction terminal 103 without any operation (Step S27). If the data for which the transfer request has been generated is encoded data, then a determination is made as to whether or not the data can be decoded by the recording/reproduction terminal 103, by determining whether or not a coding format of the data corresponds to a coding format of the built-in coding device information regarding the recording/reproduction terminal 103 (Step S23). Then, if the data can be decoded by the recording/reproduction terminal 103, the encoded data is transferred to the recording/reproduction terminal 103 without any operation (Step S27). In the first embodiment, however, it is assumed that the recording/reproduction terminal 103 does not have any built-in coding device, so that the terminal information indicates that the recording/reproduction terminal 103 does not have any built-in coding device. In such a case, the signal conversion unit 102 determines at step S23 that the encoded data cannot be decoded by the recording/reproduction terminal 103 regardless of the coding format of the encoded data for which the reproduction request has been generated.

If the data for which the reproduction request has been generated is encoded data and can be decoded by the recording/reproduction terminal 103, then the signal conversion unit 102 determines whether or not the encoded data can be decoded in the removable coding device 100 (Step S24), and if the encoded data can be decoded, then the encoded data in the internal memory 106 is decoded. Then, a frame rate and resolution are converted using the maximum data transfer amount information and the resolution information obtained by the terminal information obtainment unit 101, and video data after being converted is transferred to the recording/reproduction terminal 103 (Step S25). If the encoded data cannot be decoded even in the removable coding device, then a signal indicating impossibility of reproduction is sent to the recording/reproduction terminal 103 (Step S26).

Note that in a case where the recording/reproduction terminal 103 has a built-in coding device, if the data received from the removable coding device 100 is encoded data, then the recording/reproduction terminal 103 decodes the encoded data by the built-in coding device to be reproduced, and if the data received from the removable coding device 100 is video data or text data which is not encoded, then the data is reproduced and displayed without being decoded.

Note that the step S21 may be performed between the step S22 and the step S23. Note also that the signal indicating impossibility of reproduction at step S26 may be any other method such as an error signal, as far as the method can notify the recording/reproduction terminal 103 of the impossibility of reproduction.

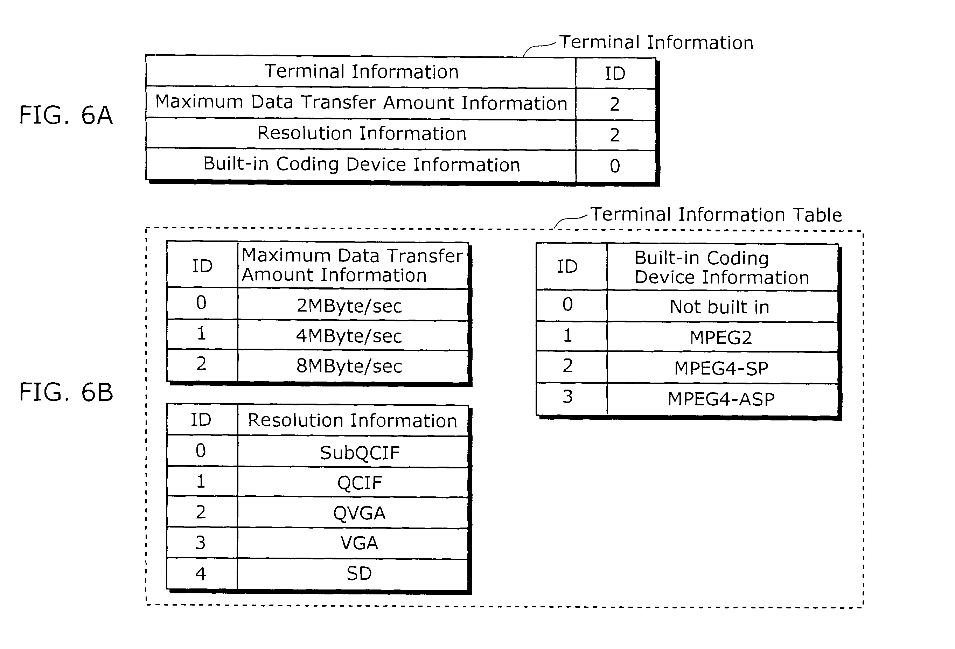

Next, an example of a format of the terminal information regarding the recording/reproduction terminal 103 which is obtained by the terminal information obtainment unit 101 is described with reference to FIG. 6. FIG. 6A is a table showing one example of indication of the terminal information. FIG. 6B is a table showing one example of the terminal information table indicating a relationship between an identification (ID) of each item indicated in the terminal information and detail of each item identified by the ID. As shown in FIG. 6A, the terminal information indicates details of maximum data transfer amount information, resolution information, and built-in coding device information, using respective IDs. The maximum data transfer amount information indicates maximum data transfer amount of the SD interface which is included in the recording/reproduction terminal 103. As shown in FIG. 6B, if the ID of the maximum data transfer amount information is "0", maximum data transfer amount of the SD interface in the recording/reproduction terminal 103 is 2 MByte/sec, if the ID is "1", maximum data transfer amount is 4 MByte/sec, and if the ID is "2", maximum data transfer amount is 8 MByte/sec. The resolution information indicates resolution appropriate for the display 108 of the recording/reproduction terminal 103. As shown in FIG. 6B, if the ID of the resolution information is "0", appropriate resolution is "SubQCIF", and if the ID is "1", appropriate resolution is "QCIF". In addition, if the ID of the resolution information is "2", appropriate resolution is "QVGA", if the ID of the resolution information is "3", appropriate resolution is "VGA", and if the ID of the resolution information is "4", appropriate resolution is "SD". The built-in coding device information indicates a coding format of a built-in coding device which is built in the recording/reproduction terminal 103. As shown in the terminal information table of FIG. 6B, the ID of the built-in coding device information is "0", the recording/reproduction terminal 103 does not have a built-in coding device. In addition, if the ID of the built-in coding device information is "1", a coding format of the built-in coding device is "MPEG-2", and if the ID of the built-in coding device information is "2", a coding format of the built-in coding device is "MPEG4-SP". In addition, if the ID of the built-in coding device information is "3", a coding format of the coding device which is built in the recording/reproduction terminal 103 is "MPEG4-ASP". Thus, detail of each item indicated in the terminal information is identified by an ID number in the terminal information table of FIG. 5. Therefore, the example of the terminal information of FIG. 6A indicates that maximum data transfer amount of the recording/reproduction terminal 103 is 8 MByte/sec, appropriate resolution of the recording/reproduction terminal 103 is QVGA, and the recording/reproduction terminal 103 does not have a built-in coding device.

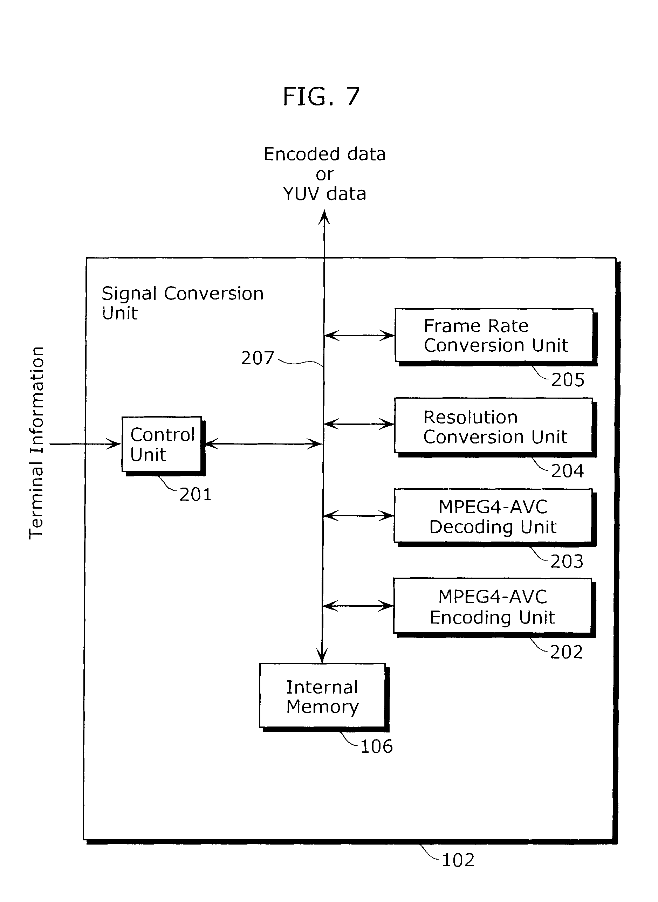

Next, a structure of the signal conversion unit 102 according to the first embodiment is described. FIG. 7 is a block diagram showing an internal structure of the signal conversion unit 102 according to the first embodiment. As shown in FIG. 7, the signal conversion unit 102 includes: a control unit 201 which controls each unit based on the terminal information obtained from the terminal information obtainment unit 101; an MPEG4-AVC encoding unit which performs encoding using MPEG4-AVC; an MPEG4-AVC decoding unit 203 which performs decoding using MPEG4-AVC; a resolution conversion unit 204 which performs resolution conversion of video; a frame rate conversion unit 205 which converts a frame rate of video; an internal memory 106 which is used as a storing and working memory for encoded data and text data; and a data bus 207.

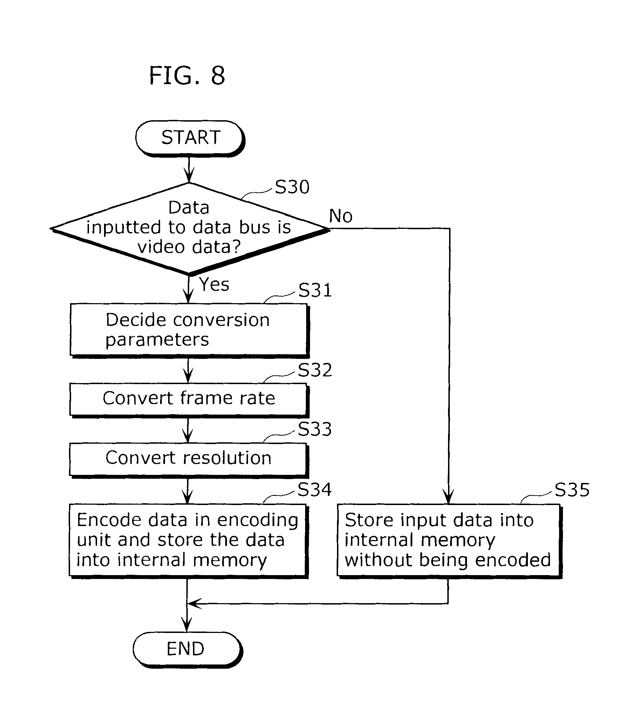

Next, an operation performed by the signal conversion unit 102 when data is transferred from the recording/reproduction terminal 103 to the data bus 207 with reference to FIG. 8 is described. FIG. 8 is a flowchart showing the operation performed by the signal conversion unit 102 when data is transferred from the recording/reproduction terminal 103. Firstly, when data is inputted to the data bus 207, the control unit 201 determines whether or not the input data is video data (Step S30). If the input data is video data, then the control unit 201 decides, using the first predetermined method, conversion parameters for conversion processing of the input video data, by setting a frame rate and resolution as the parameters, so that a data size after the input video data is encoded does not become greater than an available capacity of the internal memory 106. Then, the decided conversion parameters are sent to the frame rate conversion unit 205 and the resolution conversion unit 204 (Step S31). The frame rate conversion unit 205 converts a frame rate of video data using the received conversion parameter and transfers the converted video data to the resolution conversion unit 204 (Step S32). The resolution conversion unit 204 converts resolution of the video data according to a value of the received conversion parameter and transfers the converted video data to the MPEG4-AVC encoding unit 202 (Step S33). The MPEG4-AVC encoding unit 202 encodes the input video data into an MPEG4-AVC format, and stores the encoded data into the internal memory 106 (Step S34). In a case where data except the video data is inputted to the data bus 207, the control unit 201 stores the input data to the internal memory 106 directly without any operations (Step S35).

Note that an order of the frame rate conversion at step S32 and the resolution conversion at step S33 may be inversed.

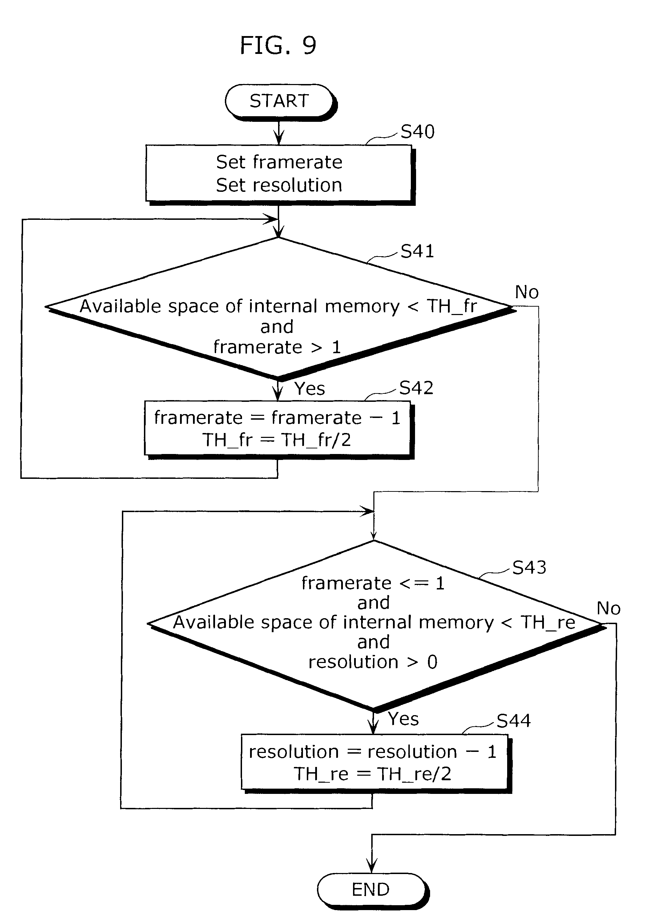

Next, the first predetermined method for deciding the conversion parameter of video data is described. FIG. 9 is a flowchart showing processing when the conversion parameter of video data is decided. Here, the frame rate and the resolution of the video data are adjusted depending on an available capacity of the internal memory 106 in order to store the encoded data into the available capacity of the internal memory 106. The control unit 201 obtains the frame rate and the resolution of the video from video information stored in a header or the like of the video data. Then, according to the flowchart of FIG. 9, the conversion parameters for converting the frame rate and the resolution of the video are decided depending on the available capacity of the internal memory 106. The following describes a method of deciding the conversion parameters with reference to the flowchart of FIG. 9. Firstly, a frame rate and resolution of input video data are set to as a variable "framerate" and a variable "resolution", respectively, as initial values (Step S40). Note that the variable "framerate" stores a numeric value of the frame rate of the input video data, and the variable "resolution" stores an ID number which is increased as the resolution is increased, in the similar manner as the ID numbers assigned to the resolution information in FIG. 6. Next, a determination is made as to whether or not the available capacity of the internal memory 106 is smaller than a threshold value TH_fr and at the same time the variable "framerate" is greater than "1" (Step S41), and if the determination result is true, then a value of the "framerate" is decreased by "1" and a value of the threshold value TH_fr is halved (Step S42). And then, the determination at step S41 is performed again. By repeating the steps S41 and S42, a variable "framerate" is decided for reducing the frame rate of the video depending on the available capacity of the internal memory 106. Next, if the determination result at step S41 is false, then the processing proceeds to step S43, and a determination is made as to whether or not the variable "framerate" is equal to or less than "1", the available capacity of the internal memory 106 is smaller than the threshold value TH_re, and the variable "resolution" is greater than "0". If the determination result at step 43 is true, then the variable "resolution" is decreased by "1" and a value of the threshold value TH_re is halved, and after that, the determination at step S43 is performed again. By repeating the steps S43 and S44, when the frame rate is equal to or less than "1", the variable "resolution" for decreasing the resolution of the video is decided depending on the available capacity of the internal memory 106. The control unit 201 sets the variables "framerate" and "resolution" obtained by the above processing as the conversion parameters, and sends the variables to the frame rate conversion unit 205 and the resolution conversion unit 204, respectively.

Note that the above describes that and the resolution is decreased (Steps S43 to S44) after the frame rate is decreased (Steps S41 to S42), but the order of the processing may be inversed.

The conversion of the frame rate and the resolution of the video data indicated in FIG. 9 performed by the frame rate conversion unit 205 and the resolution conversion unit 204 may be performed only once before the MPEG4-AVC encoding unit 202 starts encoding, or may be performed during encoding of the MPEG4-AVC encoding unit 202 by starting the frame rate conversion unit 205 and the resolution conversion unit 204 regularly every constant time period.

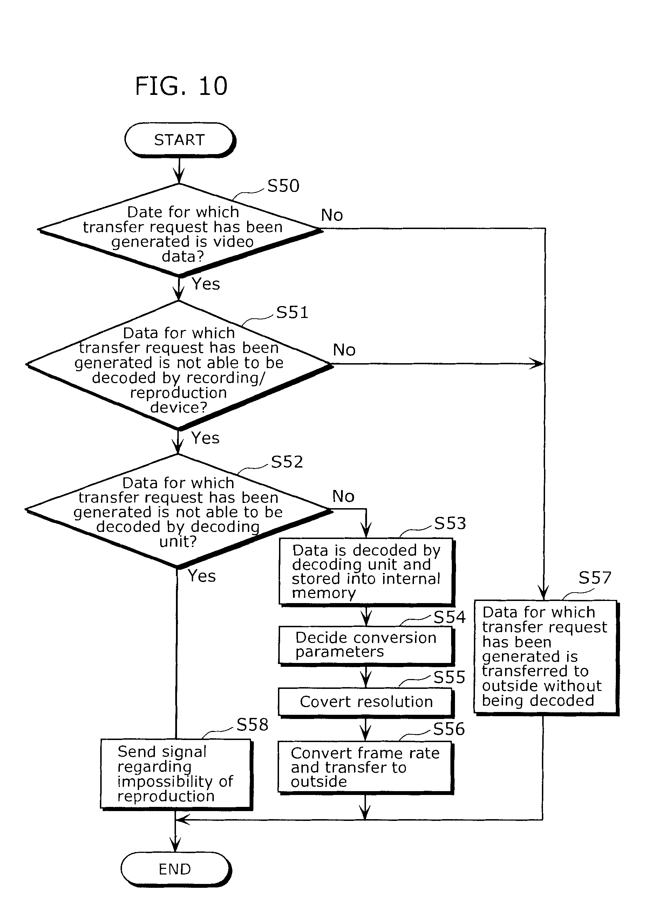

Next, an operation performed by the signal conversion unit 102 in a case that data is transferred from the inside memory 106 via the data bus 207 to the outside is described. FIG. 10 is a flowchart showing the operation performed by the signal conversion unit 102 in a case that data stored in the inside memory 106 is transferred into the outside. When a data transfer request is received from the recording/reproduction terminal 103, the control unit 201 determines whether or not the data for which the transfer request has been generated is encoded data (Step S50), and if the data is not encoded data, then the data is transferred to the outside without any operation (Step S57). If the data for which the transfer request has been generated is encoded data, then the control unit 201 determines based on the built-in coding device information in the terminal information whether or not a file format of the data for which the transfer request has been generated can be decoded by the recording/reproduction terminal 103 (Step S51). If the determination is made that the data can be decoded by the recording/reproduction terminal 103, then the encoded data is read out from the internal memory 106 and outputted to the outside without any operation (Step S57). If the determination is made that the recording/reproduction terminal 103 cannot decode the encoded data, then a determination is made as to whether or not the encoded data can be decoded by the MPEG4-AVC decoding unit 203 in the signal conversion unit 102 (Step S52), and if the encoded data can be decoded, then the encoded data read from the internal memory 106 is transferred to the MPEG4-AVC decoding unit 203 and decoded. Video data in the YUV format decoded by the MPEG4-AVC decoding unit 203 is temporarily stored into the internal memory 106 on a picture-by-picture basis (Step S53). Next, the control unit 201 decides, using the second predetermined method, conversion parameters for converting a frame rate and resolution of the video to be transferred to the recording/reproduction terminal 103, from the maximum data transfer amount information and the resolution information in the terminal information (Step S54), and sends the decided conversion parameters to the frame rate conversion unit 205 and the resolution conversion unit 204, respectively. The resolution conversion unit 204 reads the video in the YUV format from the internal memory 106 and performs resolution conversion based on the conversion parameter obtained from the control unit 201, and transfers the converted video to the frame rate conversion unit 205 (Step S55). The frame rate conversion unit 205 receives the video from the resolution conversion unit 204, modifies the frame rate of the video based on the conversion parameter obtained from the control unit 201, and sends the converted data to the outside (Step S56). If neither the recording/reproduction terminal 103 nor the MPEG4-AVC decoding unit 203 can decode the encoded data, a signal indicating impossibility of reproduction is outputted to the outside (Step S58).

Note also that the signal indicating impossibility of reproduction at step S58 may be any other method such as an error signal, as far as the method can notify the recording/reproduction terminal 103 of the impossibility of reproduction.

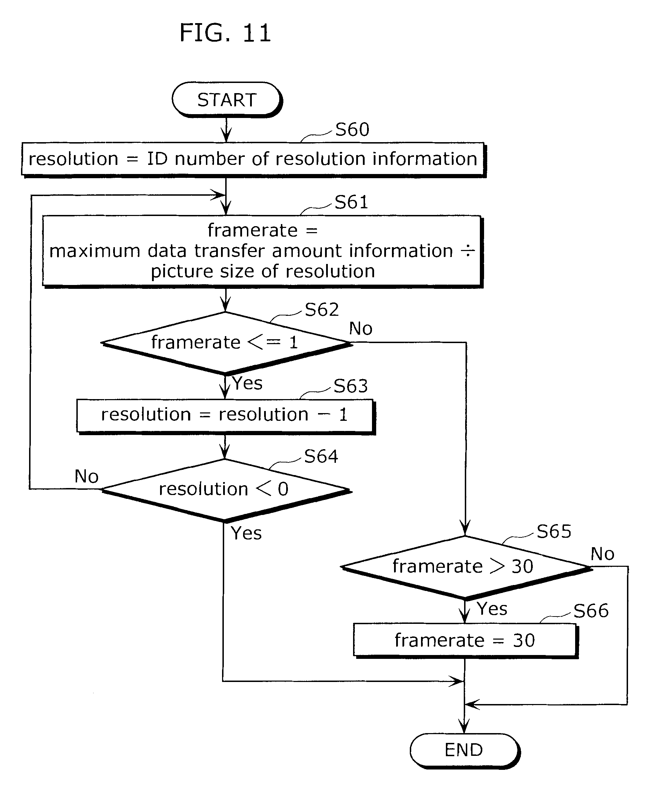

Next, the second predetermined method for deciding the conversion parameters for converting the frame rate and the resolution of the video to be transferred to the recording/reproduction terminal 103 is described. FIG. 11 is a flowchart showing an operation performed by the control unit 201 to decide the conversion parameters. The control unit 201 decides the conversion parameters according to the flowchart of FIG. 11 using the maximum data transfer amount information and the resolution information in the terminal information. The following describes a method for deciding the conversion parameters using with reference to the flowchart of FIG. 11. Firstly, as an initial value, an ID number of the resolution information of FIG. 6 is set to as a variable "resolution" (Step S60). Then, a frame rate at which data can be transferred to the recording/reproduction terminal is obtained from the maximum data transfer amount information and an image size of the resolution stored in the variable "resolution", and stored into the variable "framerate" (Step S61). For example, when the maximum data transfer amount is 4 MByte/sec and the resolution is VGA, the frame rate can be obtained using the following equation

$$\text{framerate} = 4 \text{ Mbyte/sec} \div (640 \times 480 \times 1.5) \text{ Byte/frame} = 9.1 \text{ fps}$$

Next, a determination is made as to whether or not the variable "framerate" is equal to or less than "1" (Step S62), and if the determination result is true, then a value of the variable "resolution" is decreased by "1" (Step S63). Then, the variable "resolution" becomes smaller than "0", the determination is made that transfer is impossible, and ends the processing (Step S64). If the variable "resolution" is more than "0", then by repeating the steps S64 to Step S61 again, the frame rate and the resolution are adjusted. If the variable "framerate" becomes greater than "1" at step S62, then clipping of a maximum value of the frame rate is performed (Steps S65 and S66) and ends the processing. The control unit 201 sets the variables "framerate" and "resolution" obtained by the above processing to as conversion parameters and sends the conversion parameters to the frame rate conversion unit 205 and the resolution conversion unit 204, respectively.

Note that the above has described that a minimum value of the frame rate is "1" at the step S62, but the minimum value may be a value that is more than "1". Note also that the above has described that a maximum value of the frame rate is "30" at the steps S65 and S66, but the maximum value may be a value that is more than "30".

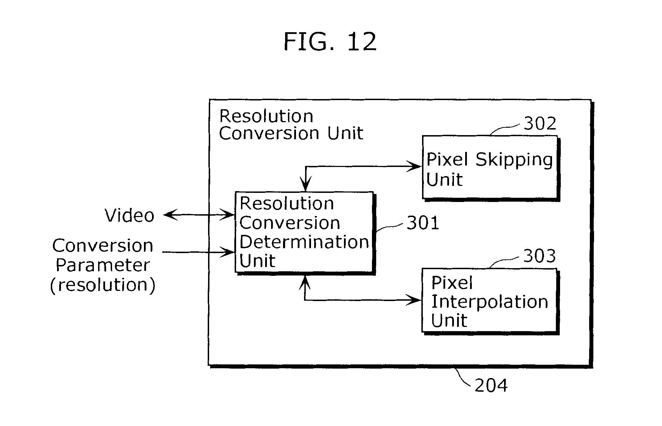

Next, a structure of the resolution conversion unit 204 is described. FIG. 12 is a block diagram showing an internal structure of the resolution conversion unit 204 shown in FIG. 4. As shown in FIG. 12, the resolution conversion unit 204 includes: a resolution conversion determination unit 301 which switches a resolution conversion unit based on the conversion parameter received from the control unit 201: a pixel skipping unit 302 which performs down-conversion by skipping pixels after applying low pass filtering (LPF); and a pixel interpolation unit 303 which performs up-conversion by interpolating the pixels using the LPF.

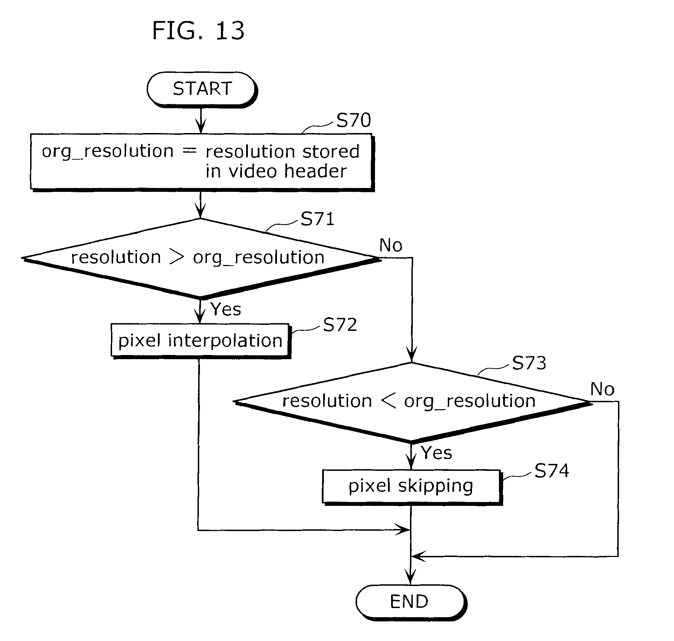

Next, an operation performed by the resolution conversion unit 204 is described with reference to FIG. 13. FIG. 13 is a flowchart showing an operation performed by the resolution conversion unit 204 shown in FIG. 12. Firstly, the resolution conversion determination unit 301 obtains, as an initial value, the resolution from a header of the input video data, and sets the value to as a variable "org_resolution" (Step S70). Then, a value of the conversion parameter "resolution" is compared with a value of the variable "org_resolution", and if the conversion parameter "resolution" is greater than the value of the variable "org_resolution", then up-conversion is performed by the pixel interpolation unit 303 from "org_resolution" to "resolution" (Step S72). If the conversion parameter "resolution" is smaller than the value of the variable "org_resolution", then down-conversion is performed by the pixel skipping unit 302 from "org_resolution" to "resolution" (Step S73). If the value of the conversion parameter "resolution" is equal to the value of "org_resolution", the resolution conversion is not performed. According to the above processing, the resolution conversion unit 204 performs the resolution conversion of the input video based on the conversion parameters. Note that the up-conversion and the down-conversion of Steps S72 and S74 may be a method of interpolation and skipping using the LPF and the like, a method of replication of high-frequency components of images, or the like.

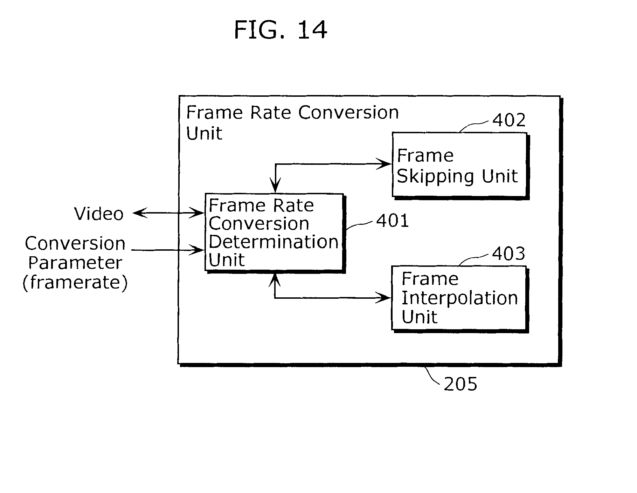

Next, a structure of the frame rate conversion unit 205 is described. FIG. 14 is a block diagram showing an internal structure of the frame rate conversion unit 205 shown in FIG. 7. As shown in FIG. 14, the frame rate conversion unit 205 includes: a frame rate conversion determination unit 401 which switches a frame rate conversion unit based on the conversion parameter received from the control unit 201: a frame skipping unit 402 which decreases the frame rate by skipping frames after applying the LPF; and a frame interpolation unit 403 which improves the frame rate by generating interpolation image of the frames using the LPF.

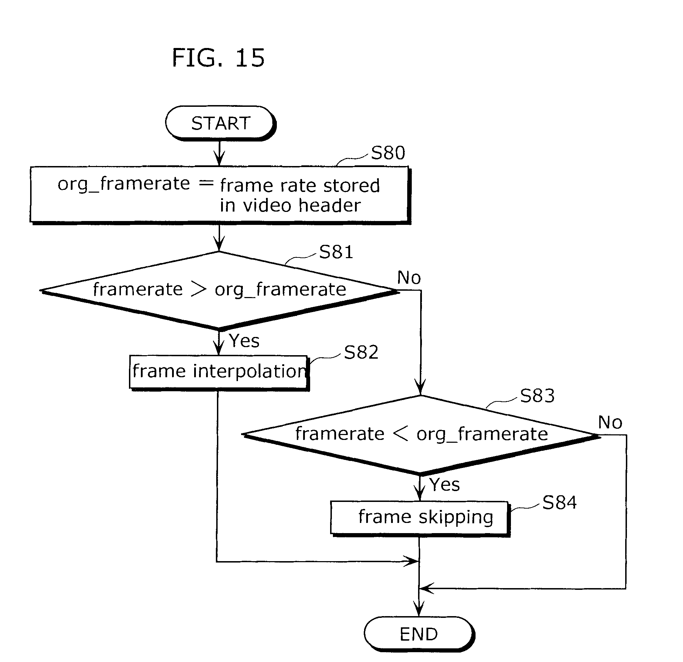

Next, an operation performed by the frame rate conversion unit 205 is described with reference to a flowchart of FIG. 15. FIG. 15 is a flowchart showing an operation performed by the frame rate conversion unit 205 shown in FIG. 14. Firstly, the frame rate conversion determination unit 401 obtains a frame rate from a header of the input video data and sets the obtained data as an initial value to a variable "org_framerate" (Step S80). Then, a value of the conversion parameter "framerate" is compared with the value of the variable "org_framerate", and if the conversion parameter "framerate" is greater than the value of the variable "org_framerate", then up-conversion is performed by the frame interpolation unit 403 from "org_framerate" to "framerate" (Step S82). If the conversion parameter "framerate" is smaller than the value of the variable "org_framerate", then down-conversion is performed by the frame skipping unit 402 from "org_framerate" to "framerate" (Step S83). If the value of the conversion parameter "framerate" is equal to the value of "org_framerate", the frame rate conversion is not performed. According to the above processing, the frame rate conversion unit 205 performs frame rate conversion of input video data based on the conversion parameter. Note that the methods of the up-conversion and the down-conversion may be a method of interpolation and skipping of frames using the LPF or the like, a method of using the same frame repeatedly, or the like.

According to the above structure of the first embodiment, when the recording/reproduction terminal 103 holds a general-purpose slot such as a SD slot and a storage unit such as a memory storing the terminal information, even if the recording/reproduction terminal 103 does not have a built-in coding device, the recording/reproduction terminal 103 can encode and decode video captured by an built-in camera or the like, only by inserting the removable coding device 100 into the recording/reproduction terminal 103.

Further, the recording/reproduction terminal 103 does not need to embedded with a codec LSI or a software codec, which results in cost reduction.

Still further, by setting the coding device and the encoded data storage memory (internal memory 106) to be detachable from the recording/reproduction terminal, AV interaction among recording/reproduction terminals can be performed only by replacing the removable coding devices, so that the AV interaction can be performed easily.

Still further, by setting the coding device and the encoded data storage memory to be detachable from the recording/reproduction terminal, even if the codec techniques used in the standards and the like are modified, even old recording/reproduction terminal can deal with the modification by inserting the removable coding device compliant with the new codec techniques into the old recording/reproduction terminal.

Still further, by setting the coding device and the encoded data storage memory to be detachable from the recording/reproduction terminal, a user can replace the removable coding device with another device depending on a purpose of usage, so that it is possible to provide the recording/reproduction terminal 103 based on a user's desire.

Still further, by obtaining by the terminal information obtainment unit 101 the resolution information appropriate for the display 108 of the recording/reproduction terminal 103, the removable coding device 100 can convert the resolution of the decoded video depending on the recording/reproduction terminal 103. This makes it possible to output video data having resolution appropriate for each recording/reproduction terminal 103 to be inserted into the removable coding device 100.

Still further, by obtaining maximum transfer amount information regarding a general-purpose slot included in the recording/reproduction terminal 103, the removable coding device 100 can convert the frame rate and the resolution of decoded video depending on the transfer amount. Thereby, the video data decoded by the removable coding device 100 can be reproduced at real time by decreasing the frame rate or the resolution during the real-time reproduction by the recording/reproduction terminal 103, even if the data transfer amount is short. Still further, if the data transfer amount is enough, by increasing the frame rate and the resolution of the decoded video data, it is possible to reproduce video data having higher image quality.

Still further, by obtaining the built-in coding device information which the recording/reproduction terminal 103 has and transferring as encoded data a coding format which the recording/reproduction terminal 103 can decode, transfer amount can be restrained more than a transfer amount of decoded video whose decoded data amount is large.

Still further, the coded data generated by the recording/reproduction terminal 103 can be stored into the internal memory 106 in the removable coding device 100 without being decoded, so that encoded data which are encoded using a plurality of coding formats can be held in the internal memory 106.

Still further, by decreasing the frame rate and the resolution of the video data received from the recording/ reproduction terminal 103 depending on a remaining amount of the internal memory 106 in the removable coding device 100, it is possible to prevent the remaining amount in the internal memory 106 from being consumed during recording of the video data.

Note that in this first embodiment, the MPEG4-AVC is used as an example of the codec techniques, but a video codec such as MPEG-2 or MPEG-4, or an audio codec such as AMR or MPEG4-AAC can be also used.

Note also that the first embodiment has described that the recording/reproduction terminal 103 does not have a built-in coding device, but the recording/reproduction terminal 103 may have a built-in coding device.

Note also that the first embodiment has described that the codec can be replaced with a codec different from the codec included in the removable coding device 100 which is currently used, only by replacing the removable coding devices 100. However, the replacement of the codecs is not limited to the replacement of the removable coding devices 100. In addition to such replacment, by using a removable coding device having a slot of a mini SD card, it is possible to replace the mini SD cards storing upgrade codecs, for example. Note also that the recording/reproduction terminal 103 may download the upgrade codec via a communication line network such as the Internet.

Note also that a SD slot has been described as an example of the unit for transferring data between the recording/reproduction terminal 103 and the removable coding device 100, but the data transfer unit may be USB interface or a general-purpose slot such as a PCI slot.

Note also that the terminal information storage unit 105 may use a part of the memory held in the recording/ reproduction terminal 103.

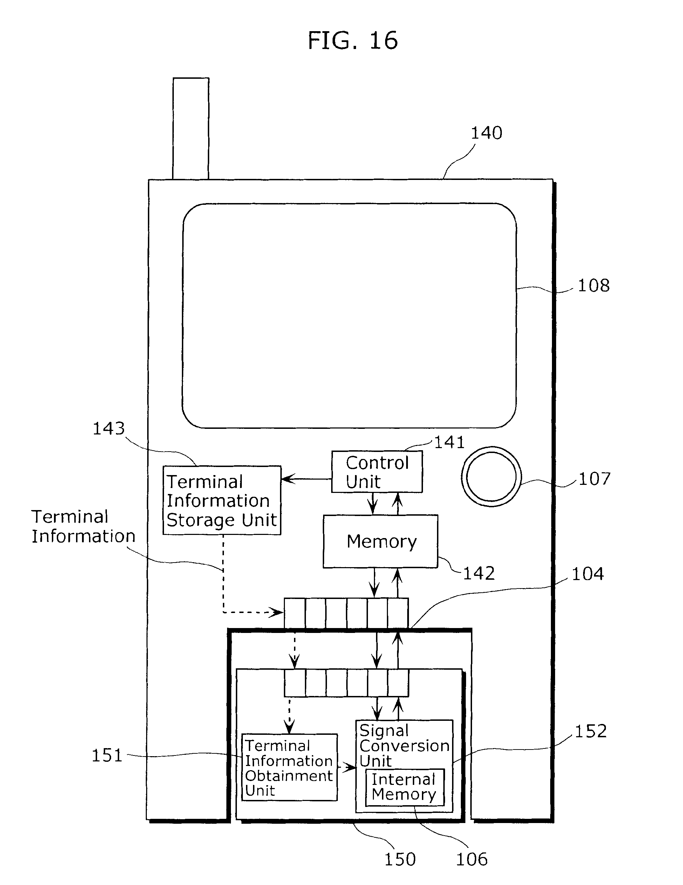

Note also that the removable coding device may perform encoding and decoding using the memory which the recording/reproduction terminal has. This is because the internal memory 106 which the removable coding device has memory restraints to some extent since the removable coding device is a SD card or the like. FIG. 16 is a block diagram showing another example of the recording/reproduction device according to the first embodiment. Another recording/ reproduction device according to the first embodiment includes a recording/reproduction terminal 140 and a removable coding device 150.

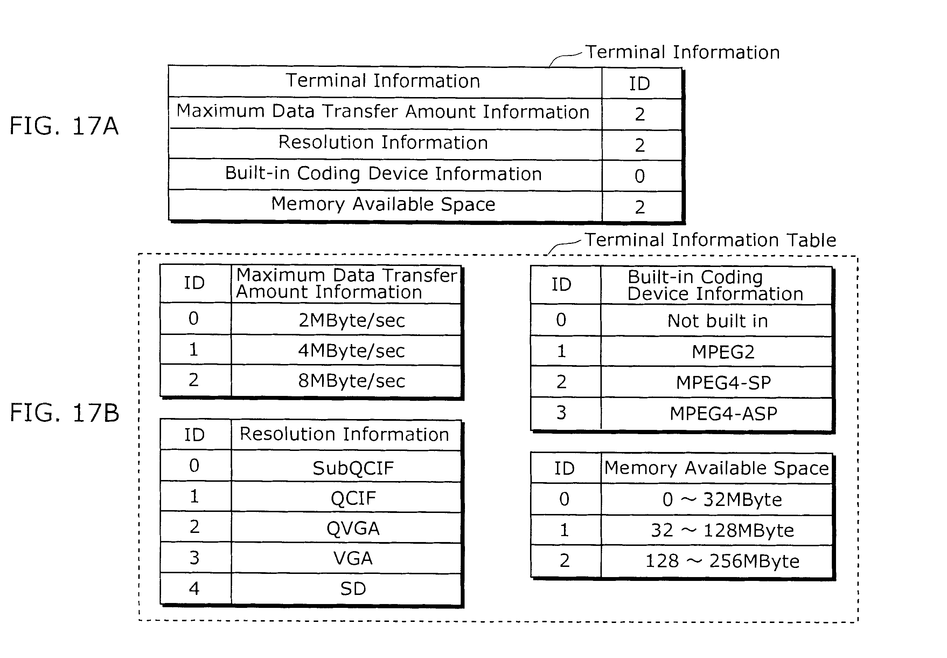

The recording/reproduction terminal 140 has a large-amount memory to some extent, and provides a memory area that is a working area for encoding or decoding depending on a request from the removable coding device 150. The recording/reproduction terminal 140 includes a SD slot 104, a camera 107, a display 108, a control unit 141, a memory 142, and a terminal information storage unit 143. The control unit 141 checks an available capacity of the memory 142 regularly, and updates terminal information to indicate the current available capacity of the memory 142. FIGS. 17A and 17B are diagrams showing terminal information and a terminal information table to be stored into the terminal information storage unit. As shown in FIG. 17A, the terminal information is further added with an item of memory available capacity. Here, a terminal information ID of the memory available capacity is "2". Referring to FIG. 17B, a list of the memory available capacity is included in a lower right-hand corner of the terminal information table. From this, it is understood that when the ID is "2", an available capacity of the memory 142 is "from 128 MByte to 256 MByte".

The removable coding device 150, for example, depending on an picture size of a moving picture to be encoded or decoded, uses the memory 142 included in the recording/reproduction terminal 140 as a frame memory. The removable coding device 150 includes a terminal information obtainment unit 151 and a signal conversion unit 152. The signal conversion unit 152 includes an internal memory 106. The terminal information obtainment unit 151 obtains as the terminal information, from the terminal information storage unit 143 of the recording/reproduction terminal 140, a memory available capacity in addition to the maximum data transfer amount information, the resolution information, and the built-in coding device information. The signal conversion unit 152 performs encoding or decoding by, for example, using the memory 142 of the recording/reproduction terminal 140 when a size of picture to be encoded or decoded is a high-definition (HD) size, and using the internal memory 106 when the size of picture is a standard-definition (SD) size. More specifically, if the picture size is a HD size, the signal conversion unit 152 sends a use request of the memory 142 to the control unit 141 of the recording/reproduction terminal 140, receives a notification regarding available memory area, and write data of the moving picture into the area. However, in the case where the terminal information obtained by the terminal information obtainment unit 151 indicates that an ID indicating an available capacity of the memory 142 is "0" and therefore there is no enough available capacity used as the frame memory for the HD-sized moving picture, a message "Memory capacity is short. Please exit out of any of the applications" or the like is displayed on the display 108 under control of the control unit 141, for example. With the above structure, the removable coding device 150 can perform encoding or decoding without any troubles, by borrowing the memory 142 included in the recording/reproduction terminal 140, even if the data to be encoded or decoded is a moving picture having a large screen and high image quality for which a large amount of memory area is required.

Note that the above another example has described that the control unit 141 monitors an available capacity of the memory 142 and updates the terminal information each time, but this is not limited to the above and the terminal information may indicate only the memory space of the memory 142 or existence of the memory 142. Note also that the it has been described that the removable coding device 150 borrow the memory 142 depending on a size of the picture to be encoded or decoded, but this is not limited to the above and the removable coding device 150 may borrow the memory 142 depending on a data size except the picture size or may always borrow the memory 142 to perform encoding or decoding when the recording/reproduction terminal 140 may include the memory 142. Note also that the above example has described that the determination is made, depending on whether the picture size is a HD size or a SD size, as to whether or not the memory 142 of the recording/reproduction terminal 140 is used, but the present invention is not limited to the above. For example, it is also possible to use the memory 142 of the recording/reproduction terminal 140, when a data amount of the picture to be encoded or decoded by the removable coding device 150 exceeds a predetermined threshold value. Note also that the above example has described that, when the memory 142 of the recording/reproduction terminal 140 is used by the removable coding device 150, the memory 142 is used as a frame memory for encoding or decoding. However, the present invention is not limited to the above but the memory 142 may be used for other usage (motion vector memory, for example). Note also that the above example has described that when the available capacity of the memory 142 is not enough to be used as the frame memory of the HD-sized moving picture, an error message "Memory capacity is short. ..." or the like is displayed, but the present invention is not limited to the above. For example, when an available capacity of the memory 142 is short, firstly audio signals of the video data may be cut off not to be encoded. Note also that in addition to the memory 142 of the recording/reproduction terminal 140, the internal memory 106 of the removable coding device 150 and a mini SD card may be used.

Note also that the first embodiment has described the video data in the YUV format as an example, but the format may be other video format such as YUY2 or RGB.

Note also that the first embodiment has described that the built-in coding device information is classified into codec techniques such as MPEG-2, MPEG4-SP, and MPEG4-ASP, but the information may be classified in more detail into MPEG-2 encoding, MPEG-2 decoding, MPEG-2 codec, and the like.

(Second Embodiment)

The second embodiment differs from the first embodiment in that the recording/reproduction terminal includes an MPEG4-SP decoding device and the signal conversion unit in the removable coding device further includes a video trans-coding unit which performs coding format conversion from a certain coding format to another coding format. The including of the video trans-coding unit makes it possible to reproduce encoded data, even if the recording/reproduction terminal can reproduce the video data only using the built-in MPEG4-SP decoding device. The recording/reproduction terminal according to the second embodiment also includes a SD slot as a connection slot in the same manner as described in the first embodiment.

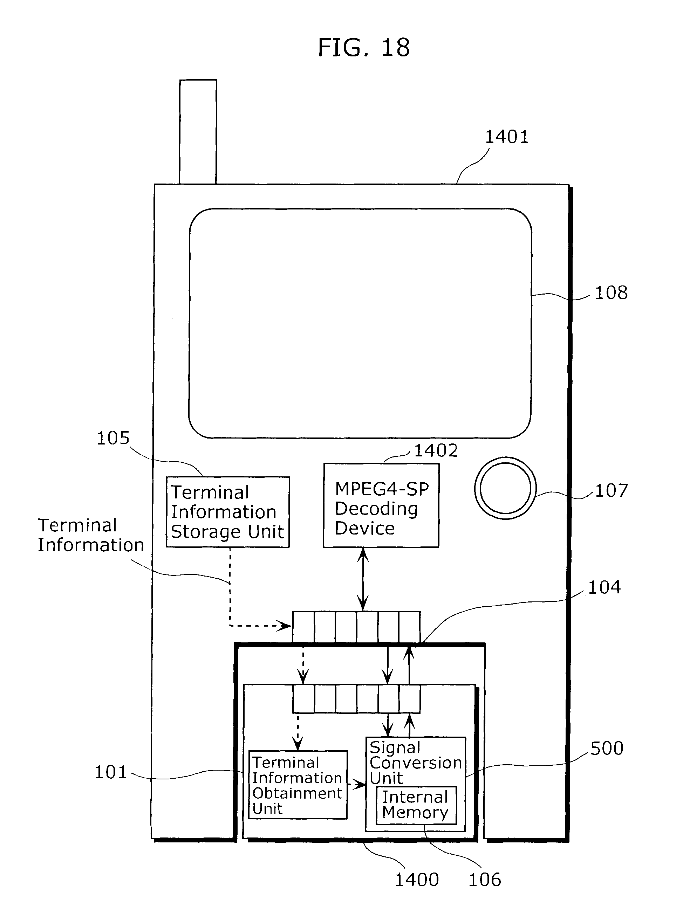

FIG. 18 is a block diagram showing one example of a recording/reproduction device according to the second embodiment. In FIG. 18, the same elements in FIG. 3 have been already described so that the elements are designated by the same reference numerals in FIG. 3 and detail of the elements are not described again below. The recording/reproduction device according to the second embodiment includes a removable coding device 1400 and a recording/reproduction terminal 1401. The removable coding device 1400 differs from the removable coding device 100 according to the first embodiment in that a signal conversion unit 500 is included. Moreover, the recording/reproduction terminal 1401 differs from the recording/reproduction terminal 103 according to the first embodiment in that an MPEG4-SP decoding device is included.

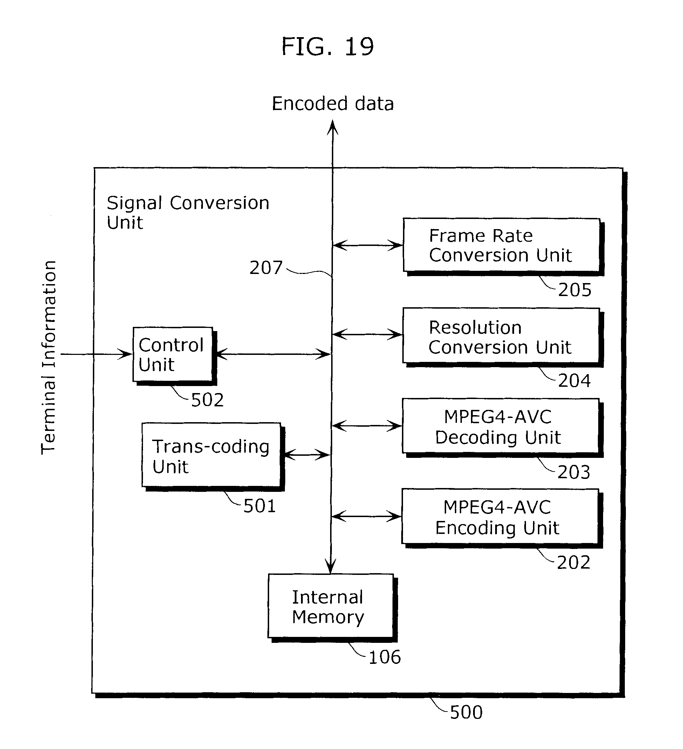

FIG. 19 is a block diagram showing an internal structure of the signal conversion unit 500 according to the second embodiment. As shown in FIG. 19, the signal conversion unit 500 includes: a control unit 502 which controls a trans-coding technique based on the terminal information obtained from the terminal information obtainment unit 101; a trans-coding unit 501 which perform trans-coding for encoded data stored in the internal memory 106; the internal memory 106 which is used as a storing and working memory for the encoded data; the MPEG4-AVC encoding unit 202 which performs encoding using MPEG4-AVC; the MPEG4-AVC decoding unit 203 which performs decoding using MPEG4-AVC; the resolution conversion unit 204 which converts resolution of video; the frame rate conversion unit 205 which converts a frame rate of video; and a data bus 207.

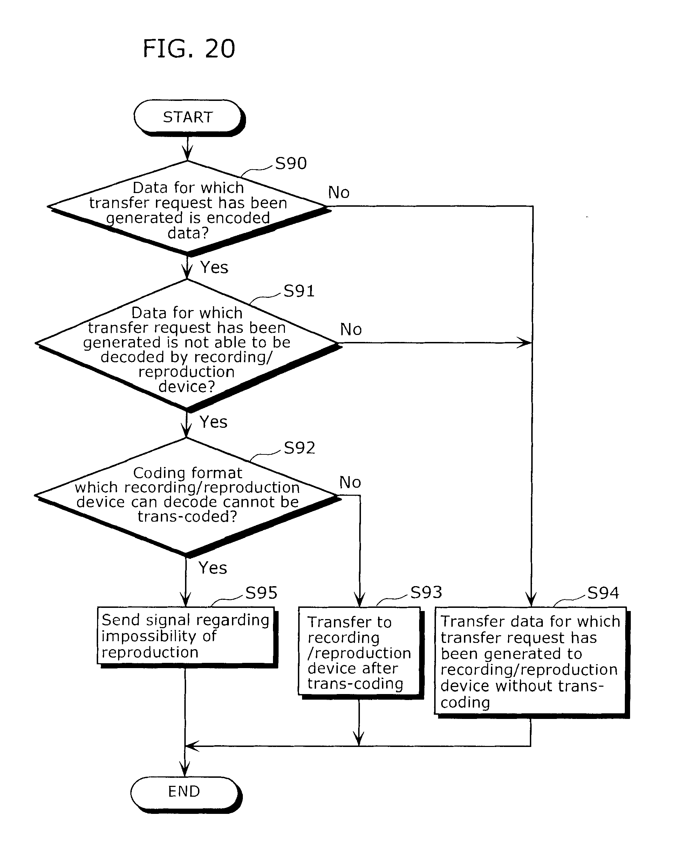

Next, an operation performed by the signal conversion unit 500 according to the second embodiment is described with reference to FIG. 20. FIG. 20 is a flowchart showing the operation performed by the signal conversion unit 500 shown in FIG. 19 to perform trans-coding. When a data transfer request is generated by the recording/reproduction terminal 1401 for the internal memory 106, the control unit 502 determines whether or not the data for which the transfer request has been generated is encoded data (Step S90), if the data is not encoded data, then the data is transferred to the recording/reproduction terminal 1401 without being decoded (Step S94). If the data for which the transfer request has been generated is encoded data, then the control unit 502 determines, based on the built-in coding device information in the terminal information, whether or not the recording/reproduction terminal 1401 can decode a file format of the data for which the transfer request has been generated (Step S91). If the determination is made that the recording/reproduction terminal 1401 can decode the data, then the encoded data is read out from the internal memory 106 and transferred to the recording/reproduction terminal without being decoded (Step S96). If the encoded data cannot be decoded by the recording/reproduction terminal 1401, then a determination is made as to whether or not the trans-coding unit 501 in the signal conversion unit 500 can trans-code the data into data of a coding format which the recording/reproduction terminal 1401 can decode (Step S92). If the data can be trans-coded, then the encoded data read out from the internal memory 106 is transferred to the trans-coding unit 501, then trans-coded into data of a coding format in the built-in coding device information (MPEG4-SP, for example), and after that transferred to the recording/reproduction terminal 1401 (Step S93). If the data cannot be trans-coded, then a signal indicating impossibility of reproduction is outputted to notify the recording/reproduction terminal 1401 that the data cannot be reproduced (Step S95).

The above description is explained more specifically using an example. For example, in a case where the recording/reproduction terminal 1401 generates a transfer request for encoded data in MPEG4-AVC format in the internal memory 106, firstly the control unit 502 determines, based on the built-in coding device information in the received terminal information, that the recording/reproduction terminal 1401 includes the MPEG4-SP decoding device 1402. Next, a determination is made as to whether or not the trans-coding unit 501 can trans-code the data from the MPEG4-AVC to MPEG4-SP, then if it is possible, such trans-coding is performed, and the generated encoded data in the MPEG4-SP format is outputted. The recording/reproduction terminal 1401 receives the encoded data in MPEG4-SP format from the removable coding device 1400, and decodes the data by the built-in MPEG4-SP decoding device 1402 to be reproduced.

According to the above second embodiment, even if the recording/reproduction terminal 1401 has only the built-in MPEG4-SP decoding device 1402 and at the same time does not have a display unit for directly displaying video in YUV format received from the removable coding device 1400, by trans-coding the data by the removable coding device 1400 into encoded data in MPEG4-SP format, it is possible to reproduce encoded data, such as MPEG4-AVC, using the MPEG4-SP decoding device in the recording/reproduction terminal 1401. Thereby, even an old product which is not compliant with new codec formats such as MPEG4-AVC can reproduce encoded data in new codec formats such as MPEG4-AVC by using the removable coding device of the second embodiment, as far as the old product holds a general-purpose slot such as a SD slot.

Note that the second embodiment has described the conversion from MPEG4-AVC into MPEG4-SP as an example of the video trans-coding techniques, but the conversion may be video trans-coding from MPEG-2 into MPEG-4 or the like, or audio trans-coding into AMR or MPEG4-AAC.

Note also that the second embodiment has described the example in which the recording/reproduction terminal includes the MPEG4-SP decoding device, but the recording/reproduction terminal may include other decoding devices.

Note also that the second embodiment has described the example in which the recording/reproduction terminal includes the decoding device such as the MPEG4-SP decoding device, but the recording/reproduction terminal may decode encoded data by executing a program for decoding data such as MPEG4-SP data using a built-in CPU. In such a case, the removable coding device 1400 may switch trans-coding methods based on processing performance information which is regarding the CPU in the recording/reproduction terminal and stored in the terminal information storage unit 105. For example, in a case where the internal memory 106 in the removable coding device 1400 stores encoded data, such as MPEG-4AVC data, whose decoding processing load is heavy, it is possible that the removable coding device 1400 obtains the CPU processing performance information which is regarding the recording/reproduction terminal and stored in the terminal information storage unit 105, and if the CPU processing performance is high, then the encoded data, such as MPEG4-AVC data, whose decoding processing load is heavy is transferred without any operation, and on the other hand if the CPU processing performance is low, then trans-coding performed from the encoded data such as MPEG4-AVC data whose decoding processing load is heavy into encoded data such as MPEG4-SP data whose decoding processing load is low and, after the trans-coding, the encoded data is transferred.

Note also that the second embodiment has described the SD slot as an example of a unit for transferring data between the recording/reproduction terminal 1401 and the removable coding device 1400, but the data transfer unit may be USB interface or a general-purpose slot such as a PCI slot.

Note also that the recording/reproduction terminal 1401 does not need to have a special memory that is the terminal information storage unit 105 for storing the terminal information, but a part of memory held by the recording/reproduction terminal 1401 may be used as the terminal information storage unit 105.

(Third Embodiment)

A recording/reproduction device according to the third embodiment is basically same as the recording/reproduction device according to the first embodiment, but differs from the recording/reproduction device according to the first embodiment in that a mini SD card is detachably connected to the removable coding device via a mini SD slot and the mini SD card is used instead of the internal memory. Note that the third embodiment uses: an MPEG4-AVC codec as a signal conversion unit in the removable coding device; a SD slot as a connection slot in the recording/reproduction terminal; and a mini SD slot as a memory slot of the removable coding device.

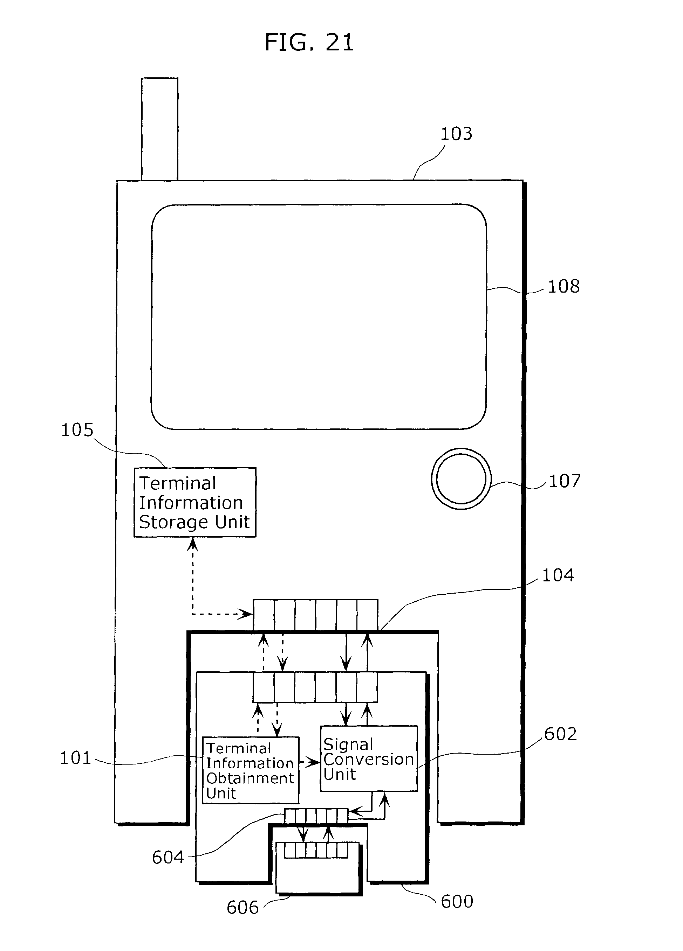

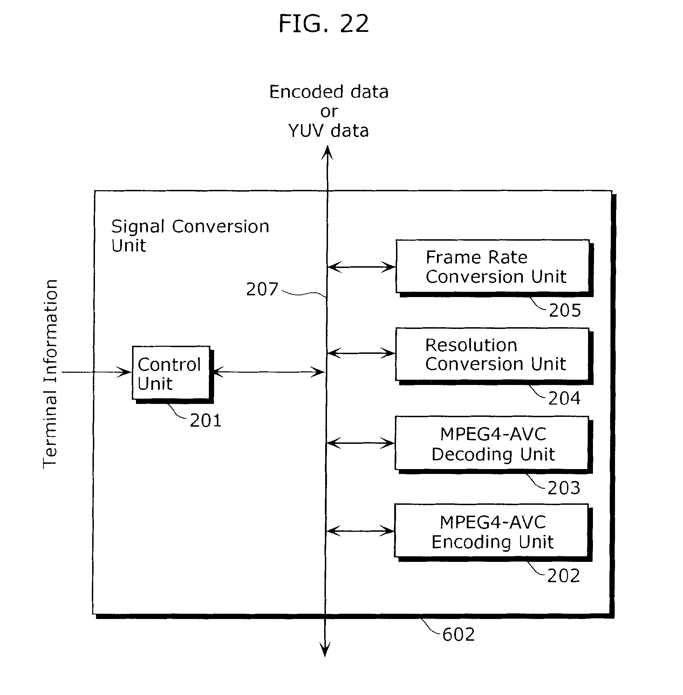

Block diagrams according to the third embodiment are shown in FIGS. 21 and 22. FIG. 21 is a block diagram showing one example of the recording/reproduction device according to the embodiment. As shown in FIG. 21, the removable coding device 600 further includes a mini SD slot 604. FIG. 22 is a block diagram showing an internal structure of the signal conversion unit 602 shown in FIG. 21. As shown in FIG. 22, the internal memory 106 is eliminated from the signal conversion unit 602.

The signal conversion unit 602 according to the third embodiment performs MPEG4-AVC codec processing by each processing unit described in the first embodiment, by using, instead of the internal memory 106 of the first embodiment, a mini SD card 606 inserted to a mini SD slot of the removable coding device 600 as a storing and working memory for encoded data.

As described above, according to the removable coding device 600 of the third embodiment, the internal memory storing encoded data can be detached from the removable coding device. Thereby, when an available capacity of the memory storing encoded data is short, it is possible to encode and decode new video by replacing the semiconductor memory such as the mini SD card, without replacing the whole removable coding device.

Note also that the third embodiment has described the MPEG4-AVC as an example of the codec techniques, but the codec technique may be a video codec such as an MPEG-2 codec or an MPEG-4 codec, or an audio codec such as a AMR codec or an MPEG4-AAC codec.

Note also that here the SD slot has been described as an example of the unit for transferring data between the recording/reproduction terminal and the removable coding device, but the data transfer unit may be USB interface or a general-purpose slot such as a PCI slot.

Note also that here the mini SD slot has been described as an example of the unit for transferring data between the removable coding device and the semiconductor memory, but the data transfer unit may be USB interface or a general-purpose slot such as a PCI slot.

Note also that as the terminal information storage unit, a part of memory held in the recording/reproduction terminal may be used.

Note also that the third embodiment has described the video in the YUV format as an example, but the video may be in other video format such as YUY2 or RGB.

Note also that the third embodiment has described that the built-in coding device information is classified into codec techniques such as MPEG-2, MPEG4-SP, and MPEG4-ASP, but the information may be classified in more detail into MPEG-2 encoding, MPEG-2 decoding, MPEG-2 codec, and the like.

] (Fourth Embodiment)

A recording/reproduction device according to the fourth embodiment has a recording/reproduction terminal which is basically same as the recording/reproduction terminal according to the first embodiment, but the fourth embodiment differs from the first embodiment in that a removable coding device includes a plurality of encoding units each of which uses different coding format from one another.

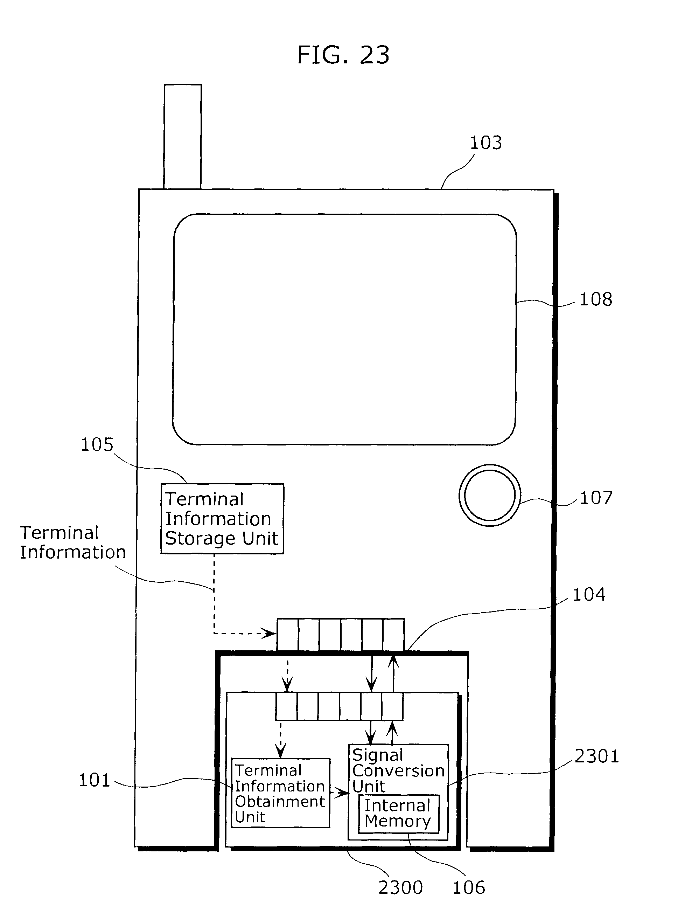

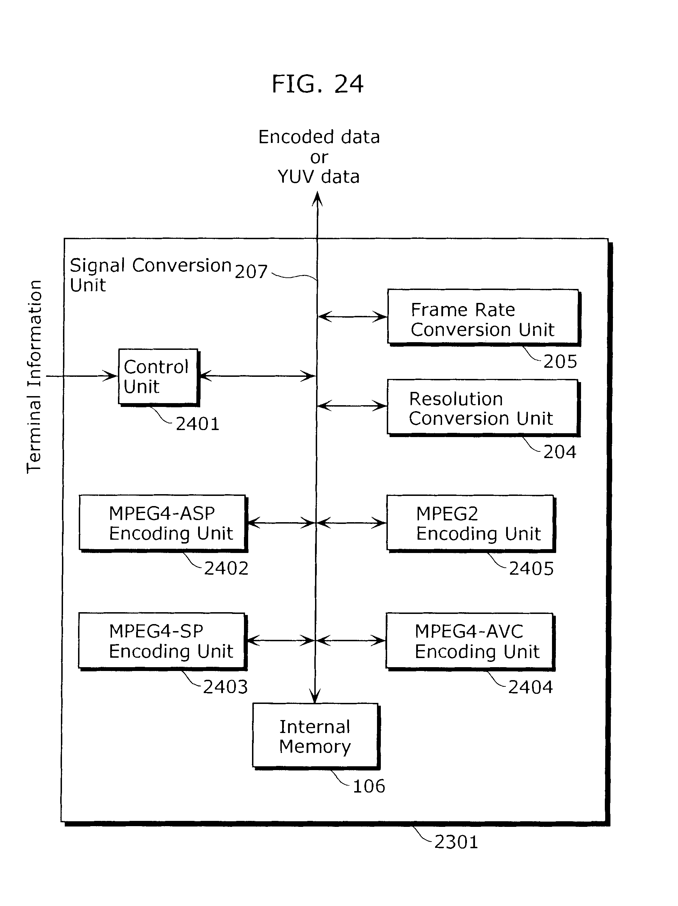

FIG. 23 is a block diagram showing one example of the recording/reproduction device according to the fourth embodiment. As shown in FIG. 23, the removable coding device 2300 includes a signal conversion unit 2301 which has a plurality of encoding units. FIG. 24 is a block diagram showing one example of an internal structure of the signal conversion unit 2301 shown in FIG. 23. The signal conversion unit 2301 is a processing unit which encodes video data received from the recording/reproduction terminal 103 using various coding formats and stores the encoded data into the internal memory 106, and the signal conversion unit 2301 includes an internal memory 106, a resolution conversion unit 204, a frame rate conversion unit 205, a data bus 207, a control unit 2401, an MPEG4-ASP encoding unit 2402, an MPEG4-SP encoding unit 2403, an MPEG4-AVC encoding unit 2404, and an MPEG-2 encoding unit 2405. The MPEG4-ASP encoding unit 2402, the MPEG4-SP encoding unit 2403, the MPEG4-AVC encoding unit 2404, and the MPEG-2 encoding unit 2405 are processing units which encode input video data, such as data in YUV format, into data of coding formats, MPEG4-ASP, MPEG4-SP, MPEG4-AVC and MPEG-2, respectively.

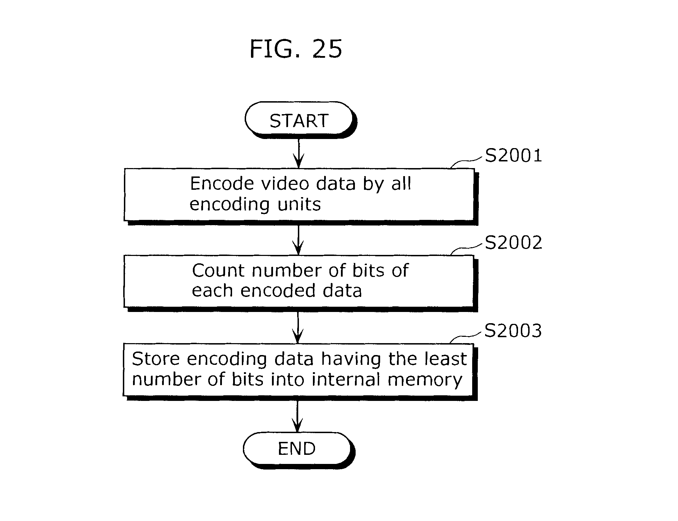

A specific operation performed by the signal conversion unit 2301 having the above structure is described with reference to the drawings. FIG. 25 is a flowchart showing the operation performed by the control unit 2401 when video data is encoded using a single encoding unit in the signal conversion unit 2301. This processing is the step S12 in the flowchart of FIG. 4 which is here described in more detail. If data received from the recording/reproduction terminal 103 is video data, the control unit 2401 makes all encoding units included in the signal conversion unit 2301 execute encoding of the video data (S2001). Subsequently, the control unit 2401 counts the number of bits in respective encoded data encoded by respective encoding units (S2002), and stores encoded data whose number of bits is the least into the internal memory 106 (S2003). More specifically, if data received from the recording/reproduction terminal 103 is video data, the control unit 2401 makes all of the MPEG4-ASP encoding unit 2402, the MPEG4-SP encoding unit 2403, the MPEG4-AVC encoding unit 2404, and the MPEG-2 encoding unit 2405 execute respective encoding processing, and the control unit 2401 stores, into the internal memory 106, encoded data whose encoded amount is the least among the respective encoded data.

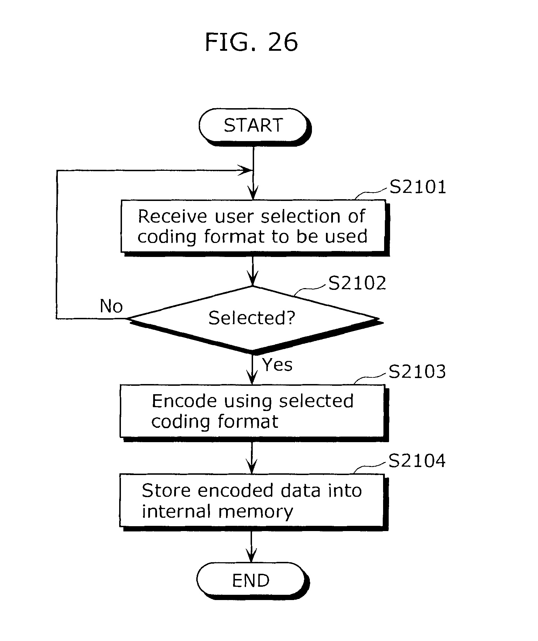

Note that, in addition to the above processing, it is also possible to present a user with a plurality of coding formats which the encoding units in the signal conversion unit 2301 can execute, so that the user can select one coding format from the presented coding formats. FIG. 26 is a flowchart showing an operation performed by the control unit 2401 to encode video data using a coding format selected by the user. If data received from the recording/reproduction terminal 103 is video data, the control unit 2401 lists, for example, executable coding formats on the display 108 and receives user's selection regarding which coding format is to be used by the encoding unit to perform encoding (S2101). After the user selects one of the listed and displayed coding formats (S2102), an encoding unit compliant with the selected coding format is executed to perform encoding (S2103), and the resulting encoded data is stored into the internal memory 106 (S2104).

As described above, according to the recording/reproduction device of the fourth embodiment, the signal conversion unit 2301 in the removable coding device 2300 includes a plurality of encoding units which perform encoding using a plurality of codec techniques, so that it is possible to perform encoding by selecting a codec technique that is the most appropriate for input video data, for example, a codec technique having high data-compressibility. Moreover, the user obtains an effect that encoding can be performed using a codec technique which the user likes.

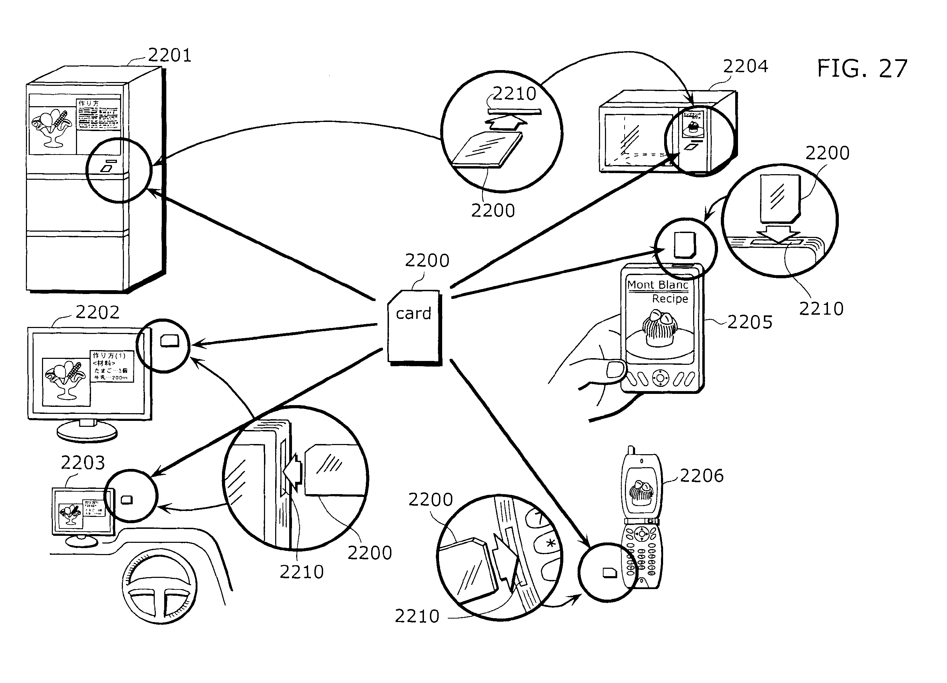

Note that the fourth embodiment has described that the signal conversion unit 2301 has the plurality of encoding units, but the signal conversion unit 2301 may have, instead of the encoding units, a plurality of decoding units which decode data encoded using various different coding formats. Note also that the signal conversion unit 2301 may have both of the plurality of encoding units and the plurality of decoding units. Thus, by including the plurality decoding units in the removable coding device 2300, it is possible, for example, that various household appliances can decode video data downloaded from the Internet or the like, only by sharing the removable coding device 2300 among the household appliances. FIG. 27 is a diagram showing one example of an audiovisual (AV) interaction network which performs AV interaction among household appliances, only by replacing the removable coding device. As shown in FIG. 27, the AV interaction network includes, for example, a refrigerator 2201, a television set 2202, a vehicle navigation system 2203, a microwave 2204, a PDA 2205, a portable telephone 2206, and the like. Each of these household appliances includes a card slot 2210 for connecting an IC card 2200 such as a SD card, and a interface thereof, and further includes a monitor or a speaker for reproducing video data appropriately. This IC card 2200 is the removable coding device in the first to fourth embodiments and may have, of course, the mini card slot as described in the third embodiment. As shown in FIG. 27, the IC card 2200 has encoded video data and a decoding unit for decoding the video data, so that even if the appliance is the refrigerator 2201 or the microwave 2204 which can reproduce only video data in a YUV format, user can appreciate the video stored in the IC card 2200 only by inserting the IC card 2200 into the card slot 2210. Moreover, when the household appliances have communication functions and download encoded audiovisual data from the Internet, even if the household appliances do not have decoding units which are not compliant to a coding format of the audiovisual data, the household appliances can decode the data only by inserting the IC card 2200 into the respective card slots 2210, as far as the removable coding device can decode is compliant with the coding format.

Note that the fourth embodiment has described that the signal conversion unit 2301 includes the MPEG4-ASP encoding unit 2402, the MPEG4-SP encoding unit 2403, the MPEG4-AVC encoding unit 2404, and the MPEG-2 encoding unit 2405, but the signal conversion unit 2301 does not have to include all of these units and may include two or more units among them. Furthermore, the signal conversion unit 2301 may include other encoding units and decoding units that are compliant to coding formats different from the above coding formats.

Note also that the recording/reproduction terminal described in the above embodiments has been assumed as a device which performs both of recording and reproducing of audiovisual data and the like, but the recording/reproduction terminal may be a device which performs only displaying or a device which performs only recording.

Note also that the functional blocks in the block diagrams (FIG. 3, FIG. 7, FIG. 12, FIG. 14, FIG. 16, FIG. 18, FIG. 19, FIG. 21, FIG. 22, FIG. 23, FIG. 24, and the like) are typically realized as an integrated circuit LSI. These functional blocks may be integrated separately, or a part or all of them may be integrated into a single chip. For example, functional blocks except a memory may be integrated into a single chip.

Note also that the integrated circuit is here referred to as a LSI, but the integrated circuit can be called an IC, a system LSI, a super LSI or an ultra LSI depending on their degrees of integration.

Note also that the integrated circuit technique is not limited to the LSI, and it may be realized as a dedicated circuit or a general-purpose processor. It is also possible to use a Field Programmable Gate Array (FPGA) that can be programmed after manufacturing the LSI, or a reconfigurable processor in which connection and setting of circuit cells inside the LSI can be reconfigured.

Note also that, if due to the progress of semiconductor technologies or their derivations, new technologies for integrated circuits appear to be replaced with the LSIs, it is, of course, possible to use such technologies to realize the functional blocks as an integrated circuit. For example, biotechnology can be applied to the above realization.

Note also that only a means for storing data to be encoded or decoded, among these functional blocks, may be realized as another structure, without being integrated into the single chip.

**Industrial Applicability**

The present invention is useful, in the field of broadcast, communication, and accumulation, as a device which records and reproduces video and audio, or the like. Further, the present invention is also useful as an integrated circuit in which functions for recording and reproducing video and audio are integrated into a single chip. Furthermore, the present invention can be applied as a device which records and reproduces still pictures. The present invention is further useful as a recording medium, such as an IC card, which records audiovisual data and an encoding/decoding program.

**Claims**

1. A recording/reproduction terminal to which an encoding or decoding device is detachably connected and which records or reproduces a signal representing audio or video, said recording/reproduction terminal comprising:

   a terminal information storage unit operable to store terminal information which is information regarding a recording/reproduction ability of the recording/reproduction terminal, and to output the terminal information to the encoding or decoding device when the encoding or decoding device is connected to said recording/reproduction terminal; and
   a signal transmission unit operable to transmit, to the encoding or decoding device, the signal representing audio or video to be encoded, when the signal representing audio or video is recorded.

2. The recording/reproduction terminal according to Claim 1, further comprising
   storing encoded data obtained by encoding the signal representing audio or video into the encoding or decoding device.

3. The recording/reproduction terminal according to Claim 2
   wherein the terminal information includes information which indicates existence of a built-in encoding or decoding device built in said recording/reproduction terminal,
   said recording/reproduction terminal making the encoding or decoding device encode the signal including audio or video, when the built-in encoding or decoding device does not exist.

4. The recording/reproduction terminal according to Claim 3 comprising
   a reproduction unit operable to receive, from the encoding or decoding device, the signal representing audio or video which is obtained by decoding the encoded data stored in the encoding or decoding device by the encoding or decoding device, and to reproduce the signal, when the built-in encoding or decoding device does not exist.

5. The recording/reproduction terminal according to Claim 4,
   wherein the terminal information includes coding format information which indicates a coding format used by the built-in encoding or decoding device, said recording/reproduction terminal further comprising
   a built-in encoding or decoding device which encodes or decodes the signal representing audio or video using a predetermined coding format,
   wherein said reproduction unit is operable to receive the signal including audio or video which is decoded by the encoding or decoding device, and to reproduce the signal when a coding format of the encoded data stored in the encoding or decoding device is different from the coding format indicated in the coding format information, and
   said built-in encoding or decoding device is operable to receive the encoded data without decoding the encoded data, and decode the data when the coding format of the encoded data stored in the encoding or decoding device is the same as the coding format indicated in the coding format information.

6. The recording/reproduction terminal according to Claim 2 further comprising:

a coding format notification receiving unit operable to receive from the encoding or decoding device a notification regarding selectable coding formats when the encoding or decoding device can encode or decode using a plurality of coding formats which are different from one another; and

a coding format selection unit operable to display the plurality of coding formats notified by the encoding or decoding device and to receive selection of one coding format made by a user, and

wherein said recording/reproduction terminal makes the encoding or decoding device encode the signal representing audio or video using the coding format selected by the user.

**7.** The recording/reproduction terminal according to Claim 2,

wherein the terminal information includes information which indicates existence of a built-in encoding or decoding device built in said recording/reproduction terminal, and a coding format information which indicates a coding format used by the built-in encoding or decoding device when the built-in encoding or decoding device exists,

said recording/reproduction terminal comprising an encoded data receiving unit operable to (1) receive encoded data whose coding format is converted into a coding format indicated in the coding format information when the coding format of the encoded data stored in the encoding or decoding device is different from the coding format indicated in the coding format information, and (2) receive the encoded data without converting the coding format of the encoded data, when the coding format of the encoded data stored in the encoding or decoding device is the same as the coding format indicated in the coding format information.

**8.** The recording/reproduction terminal according to Claim 1 further comprising:

a memory operable to provide a working area for encoding or decoding processing performed by the encoding or decoding device;

a memory use request receiving unit operable to receive a use request for said memory from the encoding or decoding device; and

a memory control unit operable to make the encoding or decoding device use a part or all of the area in said memory when the use request is received.

**9.** The recording/reproduction terminal according to Claim 8

wherein the terminal information includes memory information which indicates an available capacity of said memory in said recording/reproduction terminal,

said recording/reproduction terminal further comprises an available capacity detection unit operable to regularly detect the available capacity of said memory, and

said memory control unit is operable to update the memory information in the terminal information with a value of the newly detected available capacity.

**10.** An encoding or decoding device which is detachably connected to a recording/reproduction terminal which records or reproduces a signal representing audio or video, said encoding or decoding device comprising:

a terminal information obtainment unit operable to obtain, from the recording/reproduction terminal, terminal information which is information regarding a recording/reproduction ability of the recording/reproduction terminal when said encoding or decoding device is connected to the recording/reproduction terminal; and

an encoding or decoding unit operable to encode or decode the signal representing audio or video based on the obtained terminal information.

**11.** The encoding or decoding device according to Claim 10 further comprising

an encoded data storage unit operable to store encoded data obtained by encoding the signal representing audio or video,

wherein said encoding or decoding unit is operable to encode the signal representing audio or video and stores the encoded data into said encoded data storage unit.

**12.** The encoding or decoding device according to Claim 11,

wherein the terminal information includes information which indicates existence of a built-in encoding or decoding device built in the recording/reproduction terminal, and a coding format information which indicates a coding format used by the built-in encoding or decoding device when the built-in encoding or decoding device exists,

said encoding and decoding unit further includes

a trans-coding unit operable to (1) convert a coding format of the encoded data stored in said encoded data storage unit into a coding format indicated in the coding format information when the coding format of the encoded data is different from the coding format indicated in the coding format information, and (2) transmit the encoded data without converting the coding format of the encoded data, to the recording/reproduction terminal when the coding format of the encoded data is the same as the coding format indicated in the coding format information.

**13.** The encoding or decoding device according to Claim 11,
wherein said encoding or decoding unit includes a plurality of encoding or decoding sub-units which encodes or decodes using coding formats which are different from one another, and
said encoding or decoding unit is operable to encode the signal representing audio or video by an encoding or decoding sub-unit whose coding format has the least number of bits of the encoded data among the plurality of the coding formats.

**14.** The encoding or decoding device according to Claim 11,
wherein the terminal information includes information which indicates a maximum data transfer amount per unit time between the recording/reproduction terminal and said encoding or decoding device, and
said encoding or decoding unit is operable to convert, depending on the information indicating the maximum data transfer amount, at least one of a frame rate and resolution of a decoded moving picture signal so that a data amount per unit time of the moving picture signal does not exceed the maximum data transfer amount, when the moving picture signal is decoded from the encoded data in said encoded data storage unit.

**15.** The encoding or decoding device according to Claim 11,
wherein the terminal information includes resolution information which indicates appropriate resolution used in said reproduction unit, and
said encoding or decoding unit is operable to convert resolution of the moving picture signal decoded depending on the resolution information into the appropriate resolution, when the moving picture signal is decoded from the encoded data in said encoded data storage unit.

**16.** The encoding or decoding device according to Claim 11 further comprising
a signal receiving unit operable to receive, from the recording/reproduction terminal, a signal to be stored into said encoded data storage unit
wherein said encoding or decoding unit is operable to store the received signal without coding the received signal, when the signal is encoded data.

**17.** The encoding or decoding device according to Claim 11,
wherein said encoding or decoding unit is operable to convert at least one of a frame rate and resolution of the moving picture signal depending on an available capacity of said encoded data storage unit when the signal including audio or video is the moving picture signal, and to encode the converted signal.

**18.** The encoding or decoding device according to Claim 11,
wherein said encoded data storage unit is included in a memory card which is detachably connected to said encoding or decoding device.

**19.** The encoding or decoding device according to Claim 10,
wherein said encoding or decoding unit is operable to perform at least one of video encoding, video decoding, audio encoding, audio decoding, video trans-coding, and audio trans-coding.

**20.** The encoding or decoding device according to Claim 10,
wherein the terminal information includes memory information which indicates existence of a memory which is able to be used by said encoding or decoding device and which is built in the recording/reproduction terminal, and
said encoding or decoding unit is operable to request the recording/reproduction terminal for use of said memory, when the signal including audio or video is a moving picture signal and the memory built in the recording/reproduction terminal exists.

**21.** The encoding or decoding device according to Claim 10,
wherein the terminal information includes memory information which indicates a capacity of said memory which is able to be used by said encoding or decoding device and which is built in the recording/reproduction terminal, and
said encoding or decoding unit is operable to request the recording/reproduction terminal for use of said memory depending on a size of a picture to be encoded or decoded and the capacity of said memory indicated in the terminal information, when the signal including audio or video is a moving picture signal.

**22.** An integrated circuit which is embedded with an encoding or decoding device which is detachably connected to a recording/reproduction terminal which records or reproduces a signal representing audio or video, said integrated circuit comprising:

a terminal information obtainment unit operable to obtain, from the recording/reproduction terminal, terminal information which is information regarding a recording/reproduction ability of the recording/reproduction terminal when the encoding or decoding device is connected to the recording/reproduction terminal; and
an encoding or decoding unit operable to encode or decode the signal representing audio or video based on the obtained terminal information.

**23.** A recording/reproduction method performed by a recording/reproduction terminal to which an encoding or decoding device is detachably connected and which records or reproduces a signal representing audio or video, said method comprising:

storing previously, into a storage unit, terminal information which is information regarding a recording/reproduction ability of the recording/reproduction terminal, and outputting the terminal information to the encoding or decoding device when the encoding or decoding device is connected to the recording/reproduction terminal; and
encoding the signal representing audio or video to be encoded by transmitting the signal to the encoding or decoding device, when the signal representing audio or video is recorded onto the recording/reproduction terminal.

FIG. 1

700

Semiconductor
Memory Card
701

Address

Data

Decoding means
702 (LSI)

Memory 703
(Program)

# FIG. 2

- 808 CPU
- 806 Host-PCI Bridge
- 807 Memory
- PCI Bus 805
- PC Card Controller 804
- Inter-card direct path
- Card Socket A
- Card Socket B
- Capturing Card 802
- Encoder Card 803
- VCR 801

# FIG. 3

103

108

105

107

Terminal
Information
Storage Unit

Terminal
Information

104

Terminal
Information
Obtainment
Unit

Signal
Conversion
Unit

Internal
Memory

101

102

100    106

FIG. 4

```
        ( START )
             │
             ▼                    S10
   ┌─────────────────────┐
   │ Recording/reproduction │
   │ device transfers data to │
   │ removable coding device │
   └─────────────────────┘
             │
             ▼                    S11
          ╱─────────╲
        ╱  Data received  ╲        No
      ╱  by signal conversion unit ╲──────────┐
        ╲    is video data?     ╱             │
          ╲─────────╱                         │
             │ Yes        S12                  ▼                    S13
             ▼                        ┌─────────────────────┐
   ┌─────────────────────┐            │ Signal conversion unit │
   │ Signal conversion unit │          │ stores received video │
   │ encodes received video │          │ data into internal    │
   │ data and stores the data│         │ memory without encoding│
   │ into internal memory   │          └─────────────────────┘
   └─────────────────────┘                      │
             │                                   │
             ▼◄──────────────────────────────────┘
          ( END )
```

# FIG. 5

START

↓

S20

Recording/reproduction device generates data transfer request

↓

S21

Terminal information obtainment unit sends terminal information to signal conversion unit

↓

S22

Data for which transfer request has been generated is encoded data? — No →

↓ Yes

S23

Data for which transfer request has been generated is not able to be decoded by recording/ reproduction device? — No →

↓ Yes

S24

Data for which transfer request has been generated is not able to be decoded by removable coding device? — No →

↓ Yes

S26
Send signal regarding impossibility of reproduction

S25
Video obtained by being decoded and converted by removable coding device is transferred to recording/reproduction device

S27
Video for which transfer request has been generated is transferred to recording/ reproduction device without being decoded.

↓

END

FIG. 6A

Terminal Information

| Terminal Information | ID |
|---|---|
| Maximum Data Transfer Amount Information | 2 |
| Resolution Information | 2 |
| Built-in Coding Device Information | 0 |

FIG. 6B

Terminal Information Table

| ID | Maximum Data Transfer Amount Information |
|---|---|
| 0 | 2MByte/sec |
| 1 | 4MByte/sec |
| 2 | 8MByte/sec |

| ID | Resolution Information |
|---|---|
| 0 | SubQCIF |
| 1 | QCIF |
| 2 | QVGA |
| 3 | VGA |
| 4 | SD |

| ID | Built-in Coding Device Information |
|---|---|
| 0 | Not built in |
| 1 | MPEG2 |
| 2 | MPEG4-SP |
| 3 | MPEG4-ASP |

EP 1 768 401 A1

# FIG. 7

Encoded data
or
YUV data

Signal Conversion
Unit

Terminal Information

Control
Unit
201

207

Frame Rate
Conversion Unit
205

Resolution
Conversion Unit
204

MPEG4-AVC
Decoding Unit
203

MPEG4-AVC
Encoding Unit
202

Internal
Memory
106

102

## FIG. 8

```
        ┌─────────────┐
        │   START     │
        └──────┬──────┘
               │
               ▼                        S30
        ╱────────────────╲
       ╱      Data         ╲   No
      ╱  inputted to data bus is ╲──────────────┐
       ╲      video data?  ╱                     │
        ╲────────────────╱                       │
               │ Yes                             │
               ▼           S31                   │
        ┌─────────────────┐                      │
        │ Decide conversion│                     │
        │   parameters     │                     │
        └────────┬─────────┘                     │
                 │          S32                   │
        ┌────────▼─────────┐                      │
        │ Convert frame rate│                     │
        └────────┬─────────┘                      │
                 │          S33                   │
        ┌────────▼─────────┐                      │
        │ Convert resolution│                     │
        └────────┬─────────┘                      │
                 │   S34                    S35   │
        ┌────────▼─────────┐    ┌──────────────────┐
        │ Encode data in    │    │ Store input data into│
        │ encoding unit and │    │ internal memory      │
        │ store the data    │    │ without being encoded│
        │ into internal     │    │                      │
        │ memory            │    │                      │
        └────────┬─────────┘    └──────────┬───────────┘
                 │◄──────────────────────────┘
                 ▼
        ┌─────────────┐
        │    END      │
        └─────────────┘
```

# FIG. 9

START

Set framerate
Set resolution — S40

Available space of internal memory < TH_fr
and
framerate > 1 — S41 — No

Yes — S42

framerate = framerate − 1
TH_fr = TH_fr/2

framerate <= 1
and
Available space of internal memory < TH_re
and
resolution > 0 — S43 — No

Yes — S44

resolution = resolution − 1
TH_re = TH_re/2

END

# FIG. 10

START

S50

Date for which transfer request has been generated is video data?

No

Yes

S51

Data for which transfer request has been generated is not able to be decoded by recording/reproduction device?

No

Yes

S52

Data for which transfer request has been generated is not able to be decoded by decoding unit?

No

S53

Data is decoded by decoding unit and stored into internal memory

S54

Decide conversion parameters

S55

Covert resolution

S56

Convert frame rate and transfer to outside

S57

Data for which transfer request has been generated is transferred to outside without being decoded

Yes

S58

Send signal regarding impossibility of reproduction

END

# FIG. 11

START

S60
resolution = ID number of resolution information

S61
framerate =
maximum data transfer amount information ÷
picture size of resolution

S62
framerate $<= 1$ — No

Yes — S63
resolution = resolution $-$ 1

S64
resolution $<$ 0

No

Yes

S65
framerate $>$ 30 — No

Yes — S66
framerate = 30

END

# FIG. 12

# FIG. 13

```
        ┌─────────────┐
        │    START    │
        └─────────────┘
               │                          S70
               ▼
 ┌─────────────────────────────────────┐
 │ org_resolution = resolution stored  │
 │          in video header            │
 └─────────────────────────────────────┘
               │                          S71
               ▼                                    No
        ◇ resolution > org_resolution ◇ ──────────┐
               │ Yes                                │
               ▼              S72                   ▼
        ┌──────────────────┐                       │          S73
        │ pixel interpolation │                    ▼                      No
        └──────────────────┘         ◇ resolution < org_resolution ◇ ────┐
               │                             │ Yes                         │
               │                             ▼            S74              │
               │                      ┌──────────────┐                    │
               │                      │ pixel skipping │                  │
               │                      └──────────────┘                    │
               │                             │                            │
               └─────────────────────────────┤                            │
                                             ▼                            │
                                      ┌─────────────┐  ◄──────────────────┘
                                      │     END     │
                                      └─────────────┘
```

34

## FIG. 14

Frame Rate Conversion Unit

402

Frame Skipping Unit

Video

Conversion Parameter (framerate)

Frame Rate Conversion Determination Unit

401

403

Frame Interpolation Unit

205

# FIG. 15

```
                    ( START )

                         │
                         ▼                        S80
        ┌────────────────────────────────────┐
        │ org_framerate = frame rate stored   │
        │            in video header          │
        └────────────────────────────────────┘
                         │
                         ▼                   S81
              ◇─────────────────────────◇       No
               framerate > org_framerate  ───────────┐
              ◇─────────────────────────◇            │
                         │ Yes                        │
                         ▼              S82           │
              ┌────────────────────┐                  │
              │ frame interpolation│                  │
              └────────────────────┘                  │
                         │                            ▼              S83
                         │             ◇──────────────────────────◇      No
                         │              framerate < org_framerate   ──────┐
                         │             ◇──────────────────────────◇       │
                         │                        │ Yes                    │
                         │                        ▼           S84          │
                         │             ┌────────────────────┐              │
                         │             │   frame skipping   │              │
                         │             └────────────────────┘              │
                         │                        │                        │
                         └───────────────────────▶│◀───────────────────────┘
                                                  ▼
                                             (  END  )
```

## FIG. 16

FIG. 17A

Terminal Information

| Terminal Information | ID |
|---|---|
| Maximum Data Transfer Amount Information | 2 |
| Resolution Information | 2 |
| Built-in Coding Device Information | 0 |
| Memory Available Space | 2 |

FIG. 17B

Terminal Information Table

| ID | Maximum Data Transfer Amount Information |
|---|---|
| 0 | 2MByte/sec |
| 1 | 4MByte/sec |
| 2 | 8MByte/sec |

| ID | Resolution Information |
|---|---|
| 0 | SubQCIF |
| 1 | QCIF |
| 2 | QVGA |
| 3 | VGA |
| 4 | SD |

| ID | Built-in Coding Device Information |
|---|---|
| 0 | Not built in |
| 1 | MPEG2 |
| 2 | MPEG4-SP |
| 3 | MPEG4-ASP |

| ID | Memory Available Space |
|---|---|
| 0 | 0 ~ 32MByte |
| 1 | 32 ~ 128MByte |
| 2 | 128 ~ 256MByte |

EP 1 768 401 A1

# FIG. 18

# FIG. 19

Encoded data

**Signal Conversion Unit**

Terminal Information

207

Control Unit
502

Trans-coding Unit
501

Frame Rate Conversion Unit
205

Resolution Conversion Unit
204

MPEG4-AVC Decoding Unit
203

MPEG4-AVC Encoding Unit
202

Internal Memory
106

500

## FIG. 20

```
                        ┌─────────────┐
                        │    START    │
                        └─────────────┘
                               │
                               ▼           S90
                      ◇ Data for which ◇        No
                      ◇ transfer request has been ◇ ──────────────┐
                      ◇ generated is encoded ◇                    │
                      ◇ data? ◇                                   │
                               │ Yes                              │
                               ▼           S91                    │
                      ◇ Data for which ◇                          │
                      ◇ transfer request has been ◇    No         │
                      ◇ generated is not able to be ◇ ────────────┤
                      ◇ decoded by recording/ ◇                   │
                      ◇ reproduction ◇                            │
                      ◇ device? ◇                                 │
                               │ Yes                              │
                               ▼           S92                    │
                      ◇ Coding format ◇                           │
                      ◇ which recording/reproduction ◇   No       │
                      ◇ device can decode cannot be ◇ ──────┐     │
                      ◇ trans-coded? ◇                       │     │
                               │ Yes                         │     │
```

| Send signal regarding impossibility of reproduction | Transfer to recording /reproduction device after trans-coding | Transfer data for which transfer request has been generated to recording/reproduction device without trans-coding |
|---|---|---|
| S95 | S93 | S94 |

```
                        ┌─────────────┐
                        │    END      │
                        └─────────────┘
```

# FIG. 21

103

108

107

105

**Terminal Information Storage Unit**

104

602

101

**Terminal Information Obtainment Unit**

**Signal Conversion Unit**

604

606

600

# FIG. 22

Encoded data
or
YUV data

Signal Conversion
Unit

Terminal Information

207

Control
Unit

201

Frame Rate
Conversion Unit

205

Resolution
Conversion Unit

204

MPEG4-AVC
Decoding Unit

203

MPEG4-AVC
Encoding Unit

202

602

# FIG. 23

103

108

107

105

Terminal
Information

Terminal
Information
Storage Unit

104

2301

101

Terminal
Information
Obtainment
Unit

Signal
Conversion
Unit

Internal
Memory

2300      106

# FIG. 24

Encoded data
or
YUV data

Signal Conversion Unit 207

Terminal Information

Control Unit — 2401

Frame Rate Conversion Unit — 205

Resolution Conversion Unit — 204

MPEG4-ASP Encoding Unit — 2402

MPEG2 Encoding Unit — 2405

MPEG4-SP Encoding Unit — 2403

MPEG4-AVC Encoding Unit — 2404

Internal Memory — 106

2301

# FIG. 25

START

Encode video data by all
encoding units
S2001

Count number of bits of
each encoded data
S2002

Store encoding data having the least
number of bits into internal memory
S2003

END

FIG. 26

START

Receive user selection of
coding format to be used ⟋S2101

Selected? ⟋S2102
No ↑

Yes

Encode using selected
coding format ⟋S2103

Store encoded data into
internal memory ⟋S2104

END

FIG. 27

2201

2210

2204

2200

2200

2202

card

2200

2210

Mont Blanc Recipe

2205

2203

2210

2200

2206

2200

2210

EP 1 768 401 A1

## INTERNATIONAL SEARCH REPORT

| | International application No. |
| --- | --- |
| | PCT/JP2005/011286 |

**A. CLASSIFICATION OF SUBJECT MATTER**
Int.Cl$^7$ H04N5/91, G06F3/00, 3/06, H04N7/24

According to International Patent Classification (IPC) or to both national classification and IPC

**B. FIELDS SEARCHED**

Minimum documentation searched (classification system followed by classification symbols)
Int.Cl$^7$ H04N5/91, G06F3/00, 3/06, H04N7/24

Documentation searched other than minimum documentation to the extent that such documents are included in the fields searched
Jitsuyo Shinan Koho        1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 10-340320 A (Sony Corp.), 22 December, 1998 (22.12.98), All pages (Family: none) | 1-23 |
| A | JP 10-133829 A (Sankyo Seiki Mfg. Co., Ltd.), 22 May, 1998 (22.05.98), All pages (Family: none) | 1-23 |
| A | JP 9-306099 A (Matsushita Electric Industrial Co., Ltd.), 28 November, 1997 (28.11.97), All pages (Family: none) | 1-23 |

☐ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 September, 2005 (02.09.05) | 20 September, 2005 (20.09.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**EP 1 768 401 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000013237 A
- JP 9237166 A